# EUROPÄISCHE PATENTSCHRIFT

(11) **EP 1 467 072 B1**
(45) Veröffentlichungstag und Bekanntmachung des Hinweises auf die Patenterteilung: **19.11.2008**
(21) Anmeldenummer: 04008157.2
(22) Anmeldetag: 03.04.2004
(51) Int. Cl.: F01N 7/18, F01N 7/16, F01N 3/08, F01N 3/10

(54) **Flexibles Leitungselement**
Flexible pipe element
Elément de conduite flexible

(30) Priorität: 07.04.2003 DE 20305574 U
(43) Veröffentlichungstag der Anmeldung: 13.10.2004
(73) Patentinhaber: BOA Balg- und Kompensatoren-Technologie GmbH, 76288 Stutensee (DE)
(72) Erfinder: Pontzen, Marc, 67346 Speyer (DE); Wild, Uwe, 76307 Karlsbad (DE); Schill, Andreas, 76297 Stutensee (DE)
(74) Vertreter: Lempert, Jost

(56) Entgegenhaltungen:
- EP-A- 0 436 772
- EP-A- 0 493 680
- EP-A- 0 565 466
- EP-A- 0 974 741
- DE-A- 10 113 180
- DE-C- 19 641 963
- DE-U- 20 302 657
- DE-U- 29 520 430
- GB-A- 592 950
- US-A- 3 054 474
- US-A- 5 893 681
- US-A- 6 116 287
- US-A- 6 155 303

## Beschreibung

Die Erfindung betrifft ein flexibles Leitungselement, insbesondere für Abgasleitungen von Verbrennungsmotoren bei Kraftfahrzeugen, mit mindestens einem Balg und wenigstens einem innerhalb des Balgs koaxial angeordneten überlappende Windungen aufweisenden Schlauch, insbesondere Metallschlauch, wobei die Windungen einander in radialer Richtung berühren und der Schlauch durch den Balg radial direkt oder indirekt gehalten wird, gemäß dem Oberbegriff der Ansprüche 1, 2, 4 und 9.

Ein für Abgasleitungen vorgesehenes flexibles Leitungselement mit einem Balg und einem sich hierin parallel erstreckenden Schlauch mit überlappenden Windungen ist beispielsweise aus der DE 295 20 430 U1 bekannt. Bei dem bekannten flexiblen Leitungselement ist der innen liegende Metallschlauch ein Agraffschlauch, der durch ein metallisches Profilband gebildet ist, das in der Ausbildung als Agraffschlauch im Querschnitt neben zwei axial aufeinanderfolgenden, durch einen sich radial erstreckenden Zwischenabschnitt gebildeten, achsparallelen Abschnitten an den freien Enden der letzteren ebenfalls wiederum radial gerichtete Abschnitte und an den freien Enden dieser achsparallelen Abschnitte jeweils "zurückgewandte", zum radialen Mittelabschnitt gerichtete, achsparallele Abschnitte besitzt, die also Haken bilden und wobei der am freien Ende des radial außen liegenden Axialabschnitts befindliche Radialabschnitt nach innen gerichtet ist, während der am freien Ende des radial innen liegenden Axialabschnitts befindliche Radialabschnitt nach außen gerichtet ist. Achsparallele Abschnitte weisen also Bereiche auf, die in gemeinsamen Radialebenen liegen bzw. diese schneiden.

Durch diese Ausbildung verhaken bei der Bildung des Agraffschlauches benachbarte Windungen des Profilbandes ineinander. Dies gibt dem Agraffschlauch eine Eigenstabilität. Diese ist bei der Ausgestaltung des flexiblen Leitungselements gemäß der DE 295 20 430 U1 notwendig, weil sich dort der Agraffschlauch frei durch den Balg und ohne Berührung mit demselben (zumindest soweit keine Kräfte einwirken) erstreckt. Ein nicht eigenstabiler Wickelschlauch würde innerhalb des Balgs durchhängen und im Betrieb, bei laufendem Motor, aufgrund des Spiels gegen den Balg hin- und herschlagen und zu erheblichen Geräuschen führen.

Nachteilig bei einem Agraffschlauch sind die zur Erreichung der Eigen- bzw. Formstabilität erforderlichen hohen Kosten, die durch einen hohen Materialabsatz und kostenintensive Herstellung verursacht werden, bei welcher relativ enge Toleranzen einzuhalten sind, um einen funktionsfähigen Agraffschlauch zu schaffen. Der hohe Materialeinsatz zeigt sich beispielsweise darin, dass im gestauchten Zustand des Agraffschlauches, also bei Blocklage, praktisch vier Lagen des verwendeten Blechbandes übereinander liegen. Damit verbunden ist auch ein entsprechend hohes Gewicht und eine relativ große Gesamtwandstärke eines solchen Agraffschlauches. Weiterhin gewährleistet ein Agraffschlauch aufgrund des konstruktiv erforderlichen Überdeckens im verhakten Bereich (um eben ein Aushängen zu verhindern und die Eigen- bzw. Formstabilität zu erreichen) ein sehr beschränktes Streckverhältnis.

Die EP 1 436 772 A2 beschreibt ein flexibles Leitungselement gemäß dem Oberbegriff des Anspruchs 1. Das insbesondere für Schmiereigenschaften aufweisende Medien vorgesehene Leitungselement ist in Form eines mit endständigen Anschlussteilen fest und dicht verbundenen Wellschlauches oder Balges mit ringförmiger oder schraubengangförmiger Wellung ausgebildet, zu dem koaxial ein Geflechtsschlauch verläuft, der ihn gegen Längung abstützt und dazu ebenfalls mit den Anschlussteilen fest verbunden ist. Der Geflechtsschlauch ist seinerseits mit einer inneren Radialabstützung versehen, die bei unbelastetem Zustand des Leitungselementes praktisch spielfrei an ihm anliegt und seine maximale Länge bestimmt. Der Geflechtsschlauch einschließlich seiner Radialabstützung ist innerhalb des Wellschlauches angeordnet.

Der EP 0 565 466 A1 ist ein weiteres flexibles Leitungselement für Abgasanlagen von Kraftfahrzeugen sowie ein Verfahren zu seiner Herstellung entnehmbar. Es umfasst gleichfalls einen gewellten Balg mit außenseitig vermidertem Radius, innerhalb welchem ein Agraffschlauch angeordnet und welcher von einem rohrförmigen Segment umgeben ist.

Darüber hinaus ist aus der DE 203 02 657 U1 ein flexibles Leitungselement für Abgasanlagen von Kraftfahrzeugen bekannt, welches einen schraubengang- oder ringförmig gewellten Metallbalg mit einem koaxial innerhalb desselben angeordneten, ebenfalls schraubengangförmig gewickelten oder ringförmige Segmente aufweisenden Metallschlauch umfasst, dessen Außenquerschnitt kleiner ist als der lichte Innenquerschnitt des Metallbalges. Zwischen dem Metallbalg und dem Metallschlauch ist ein Abstandhalter angeordnet. Der Metallschlauch ist derart ausgebildet, dass die einzelnen Wicklungen bzw. die einzelnen ringförmigen Segmente zumindest in der Stauchlage des Metallschlauches in Radialrichtung keinen Formschluss mit der jeweils benachbarten Wicklung bzw. dem jeweils Segment aufweisen.

Die DE 101 13 180 A1 beschreibt einen Schlauch, der durch schraubenförmiges, mehrlagiges Wickeln von profiliertem Bandmaterial mit agraffartiger, eingehakter Bindung hergestellt ist und bei dem eine im Wesentlichen parallel zur Schlauchlängsachse umgebogene Profilschlaufe der einen bzw. ersten, im Querschnitt S-förmigen Lage als schlaufenförmige Bandverdopplung und einstückig mit einer Überdeckung in Form eines horizontalen, verlängerten Profilendabschnittes ausgebildet ist, die eine in entgegengesetzter Richtung umgebogene Profilschlaufe der benachbarten bzw. zweiten, im Querschnitt S-förmigen Lage innenseitig des Schlauches untergreift. Die Profilschlaufe ist von der Bandverdopplung in Achsrichtung des Schlauches verschiebbar aufgenommen, wobei die Profilschlaufe der zweiten Lage als schlaufenförmige Bandverdopplung und einstückig mit einer einen horizontalen, verlängerten Profilendabschnitt aufweisenden Überdeckung ausgebildet ist, welche die schlaufenförmige Bandverdopplung der ersten Lage außenseitig des Schlauches übergreift.

Schließlich können ähnliche Leitungselemente auch für Abgassysteme von Flugzeugen eingesetzt werden (GB 592 950 A).

Der Erfindung liegt die Aufgabe zugrunde, ein Leitungselement der eingangs genannten Art dahingehend weiter zu entwickeln, dass es fertigungstechnisch einfacher und damit kostengünstiger herstellbar ist, dennoch aber eine hohe Eigenstabilität aufweist.

Erfindungsgemäß wird diese Aufgabe bei einem flexiblen Leitungselement der eingangs genannten Art durch die kennzeichnenden Merkmale der Ansprüche 1, 2, 4, 5 und 9 gelöst. Vorteilhafte Ausgestaltungen ergeben sich aus den hiervon abhängigen Ansprüchen.

Das Merkmal, wonach die Windungen einander in radialer Richtung berühren und wonach der Schlauch durch den Balg radial direkt oder indirekt gehalten wird, beinhaltet, dass bei einander überlappenden Bereichen benachbarter Windungen der Innendurchmesser des einen Bereichs der einen Windung den gleichen Durchmesser hat wie ein anderer Bereich der anderen Windung, gegebenenfalls mit üblichen Toleranzen. Insbesondere hintergreifen die Windungen einander nicht mit achsparallelen Abschnitten in radialer Richtung. Auch weisen insbesondere im Querschnitt achsparallele Abschnitte einer einzigen Windung des Metallbandes nicht in einer gemeinsamen Radialebene liegende Bereiche auf. Dadurch dass die Windungen einander mit achsparallelen Abschnitten in radialer Richtung im Rahmen üblicher Toleranzen berühren, stützen sich diese Abschnitte in radialer Richtung gegeneinander ab und damit erhält der Wickelschlauch und damit auch die gesamte Anordnung eine hohe Eigenstabilität, auch wenn die Windungen abweichend vom Stand der Technik einander nicht mit achsparallelen Abschnitten in radialer Richtung hintergreifen.

Die erfindungsgemäße Lösung beruht auf einem grundsätzlich nicht eingehakten Wickelschlauch, bei dem ein Hintergreifen in axialer Richtung gegeben wäre. Ohne das radiale Aneinanderanliegen ist der Wickelschlauch nicht formstabil, was bei einem Leitungselement sehr vorteilhaft, aber nicht unabdingbar ist, wenn sich der Wickelschlauch in radialer Richtung direkt oder indirekt am Balg abstützt und daher zwischen Balg und Schlauch kein - über die gesamte Länge und den gesamten Umfang gegebener - Ringspalt gegeben ist. In bevorzugter Ausgestaltung kann vorgesehen sein, dass die radialen Überdeckungen zwischen den einzelnen Windungen das ein- bis fünffache der Wandstärke des verwendeten Blechstreifens betragen. Dies ermöglicht eine geringe radiale Erstreckung des Schlauchs von minimal dem zweifachen der Wandstärke des oder der verwendeten Metallbänder, was wiederum zu einer erheblichen Gewichts- und Kostenersparnis gegenüber dem Stande der Technik führt und den Anforderungen der Automobilindustrie hinsichtlich Kosteneinsparung und Gewichtsreduzierung, im Zuge des Leichtbaus entgegen kommt.

Durch die Verringerung der Gesamtwandstärke (bei vorgegebener Blechstärke) lässt sich entweder bei gleichem innerem Strömungsquerschnitt des Metallschlauches der Gesamtdurchmesser des flexiblen Leitungselements reduzieren oder aber bei gleichem Außendurchmesser der Strömungsquerschnitt vergrößern. Weiterhin wird durch die erfindungsgemäße Ausgestaltung eines Leitungselements das mögliche Streckverhältnis vergrößert, was wiederum bei vorgegebener Länge das Einbringen von weniger Windungen des Metallschlauches und damit auch in dieser Weise eine Einsparung an Material, Gewicht und Kosten erreicht.

Gemäß einer ersten Ausführungsvariante weist das flexible Leitungselement einen Schlauch auf, bestehend aus zwei Profilbändern, die jeweils drei im gewickelten Zustand in axialer Richtung hintereinander angeordnete, achsparallele Abschnitte aufweisen, von denen der mittlere radial zu den beiden Randabschnitten versetzt ist, und wobei benachbarte achsparallele Abschnitte einer Windung durch Abschnitte mit radialer Erstreckungskomponente verbunden sind sowie achsparallele Randabschnitte benachbarter Windungen des einen und des anderen Bandes einander axial überlappen und radial übereinander angeordnet sind. Durch diese Ausgestaltung wird ein über die Länge hin nahezu konstanter Innenquerschnitt des Metallschlauches und damit eine äußerst strömungsgünstige Ausgestaltung erreicht.

Eine zweite Ausführungsvariante, bei welcher der Schlauch durch ein Profilband mit im Querschnitt mindestens zwei, im gewickelten Zustand radial zueinander versetzten, axial aufeinanderfolgenden achsparallelen Abschnitten gebildet ist, die durch einen Verbindungsabschnitt mit zumindest radialer Erstreckungskomponenten verbunden sind, ist gekennzeichnet ist durch drei im gewickelten Zustand jeweils radial zueinander versetzte, axial aufeinanderfolgende und sich bei jeweils einem Band nicht überlappende Axialabschnitte des Querschnitts des Bandes, wobei jeweils aufeinanderfolgende Axialabschnitte durch Verbindungsabschnitte mit radialer Komponente verbunden sind.

Eine bevorzugte Ausgestaltung sieht dabei vor, dass die Abschnitte mit radialer Komponente senkrecht ausgerichtet sind oder aber dass die Bandabschnitte mit radialer Komponente entweder einen stumpfen oder einen spitzen Winkel zu den Axialabschnitten, an denen sie angeschlossen sind, einschließen.

Eine dritte Ausführungsvariante, bei welcher der Schlauch ebenfalls durch ein Profilband mit im Querschnitt mindestens zwei, im gewickelten Zustand radial zueinander versetzten, axial aufeinanderfolgenden achsparallelen Abschnitten gebildet ist, die durch einen Verbindungsabschnitt mit zumindest radialer Erstreckungskomponente verbunden sind, wobei jedoch weiterhin die Axialabschnitte an mindestens einem ihrer einander abgewandten freien Enden mit sich jeweils auf die Radialebene des anderen Axialabschnittes zu erstreckenden Abschnitten mit zumindest radialer Komponente versehen sind, sieht eine sich nach außen erstreckende radiale Ausformung des inneren achsparallelen Bandabschnittes vor, auf dem der äußere achsparallele Bandabschnitt aufliegt, wobei die Ausformung spitzwinklig oder im Querschnitt trapezförmig ausgebildet ist.

Die Abschnitte mit radialer Komponente können senkrecht ausgerichtet sein, oder die Bandabschnitte mit radialer Komponente schließen einen stumpfen oder spitzen Winkel zu den achsparallelen Abschnitten ein, an denen sie angeschlossen sind.

Schließlich sieht eine weitere Ausführungsvariante, bei welcher der Schlauch durch zwei Profilbänder gebildet ist, von denen ein radial außen liegendes Band im Querschnitt U-förmig ausgebildet ist und einen achsparallelen U-Steg sowie seitlich an diesen anschließend radial nach innen verlaufende Schenkel aufweist, vor, dass ein radial innen liegendes Band des Schlauches einen im Wesentlichen L-förmigen Querschnitt mit einem achsparallelen Steg und einem radialen Schenkel aufweist, wobei die Schenkel benachbarter Bänder einander hintergreifen, um so den Schlauch zu bilden und wobei das innere Band in dem Steg eine radial nach außen gerichtete Ausformung aufweist, auf der das äußere Band sich radial abstützt.

Hinsichtlich der Balgausgestaltung ist in einfachster Weise zunächst vorgesehen, dass der Balg einen über seine gesamte Länge einheitlichen, konstanten Radius aufweist.

In einer äußerst bevorzugten Ausgestaltung kann aber grundsätzlich vorgesehen sein, dass der Balg zumindest eine Endwelle mit geringerem Radius als die Wellen in seinem mittleren Hauptbereich aufweist. Hierdurch werden die axial auf die Balgwellen wirkenden Kipp- oder Biegekräfte eines Überzugs in Form eines Metallgestrickes oder Geflechts reduziert, so dass ein Verkippen der am Rande stehenden Balgellen vermieden wird.

In bevorzugter Ausgestaltung ist dabei vorgesehen, dass die mindestens eine Welle mit geringerem Radius eine größere, radial innen liegende Fußbreite aufweist als die anderen Wellen, wobei insbesondere die Fußbreite der Randwelle mit geringerem Radius das dreifache der Fußbreite der anderen Wellen des Balgs beträgt.

Alternativ zu einer solchen Welle mit verbreitertem Fußbereich kann vorgesehen sein, dass der Balg an jedem Ende mindestens zwei Wellen mit geringerem Radius als die Wellen in seinem mittleren Hauptbereich aufweist, wobei die jeweils äußerste Welle einen geringeren Radius als die nach innen hin folgende Welle hat, wobei allerdings die Ausgestaltung mit einer Welle mit einem verbreiterten Fußbereich eine kostengünstigere ist.

Das erfindungsgemäß vorgesehene direkte oder indirekte Halten des nicht eigen- bzw. formstabilen Metallschlauchs durch den Balg kann in einfacher Weise zunächst dadurch geschehen, dass der innere Metallschlauch und Balg einander direkt berühren.

Alternativ kann jedoch vorgesehen sein, dass zwischen Balg und Metallschlauch ein Abstandhalter angeordnet ist, wobei die Abstandhalter in verschiedenartiger Weise ausgebildet sein können, so durch eine schraubenförmig mit Abstand gewickelte Schnur, sich achsparallel zwischen Balg und Metallschlauch erstreckende Schnurabschnitten oder durch einen den Metallschlauch vollständig umgebenden Mantel. Sämtliche Abstandhalter können aus Metallgestricke, -geflecht, -gewebe oder dergleichen bestehen.

In weiterer äußerst bevorzugter Ausgestaltung ist vorgesehen, dass ein Balg einen außenseitig umgebenden Überzug aufweist.

Weitere Ausbildungen des erfindungsgemäßen Leitungselement sehen vor, dass der Überzug aus einem Metallgestrickeschlauch und/oder Metallgeflechtsschlauch besteht, wobei insbesondere auf den Enden des Leitungselements Metallringe aufsitzen, mit denen die einzelnen Lagen des Leitungselements fest, vorzugsweise durch Schweißen, verbunden sind, oder aber die Metallringe an ihren zum Mittelbereich des Leitungselements hin gerichteten Ende einen nach außen ragenden Radialflansch aufweisen.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigen:
- Fig. 1: eine Abgasanlage eines Kraftfahrzeugs mit einem erfindungsgemäßen Leitungselement;
- Fig. 2 bis 8: Teillängsschnitte durch erfindungsgemäße Leitungselemente; und
- Fig. 9 bis 14: Querschnitte durch Ausbildungen des inneren Wickelschlauch des erfindungsgemäßen Leitungselementes.

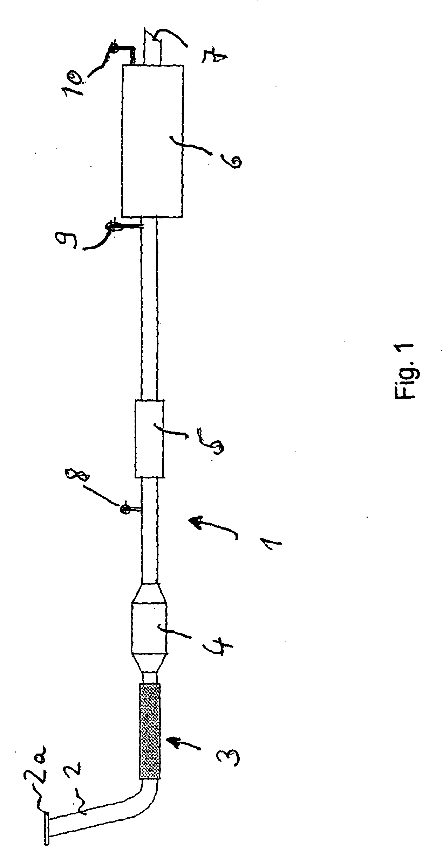

Die Fig. 1 zeigt eine Abgasleitung 1 eines Kraftfahrzeuges. Die Abgasleitung 1 weist einen Anschlussstutzen 2 mit einem Anschlussflansch 2a zum Anschluss der Abgasleitung 1 im Motor eines Kraftfahrzeugs auf. An den Anschlussstutzen 2 schließt sich ein flexibles Leitungselement 3, wie es Gegenstand der Erfindung ist, ein Entkopplungselement 4 zur Schwingungsdämpfung, ein Katalysator 5 sowie ein Schalldämpfer 6 an, wobei die einzelnen Teile durch Zwischenrohre verbunden sind. Mit dem Bezugszeichen 7 ist der Auslass der Abgasanlage bezeichnet. Bei den Bezugszeichen 8, 9, 10 ist die Abgasanlage am Unterboden des Kraftfahrzeugs befestigt. Das flexible Leitungselement 2 dient zur Aufnahme von Knickbewegungen des Motors und damit des mit diesem starr verbundenen Anschlussstutzens 10.

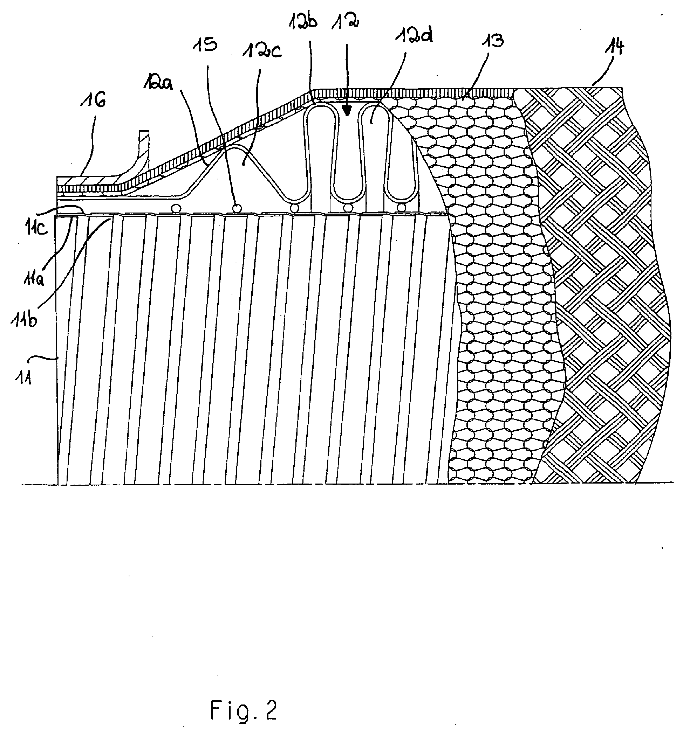

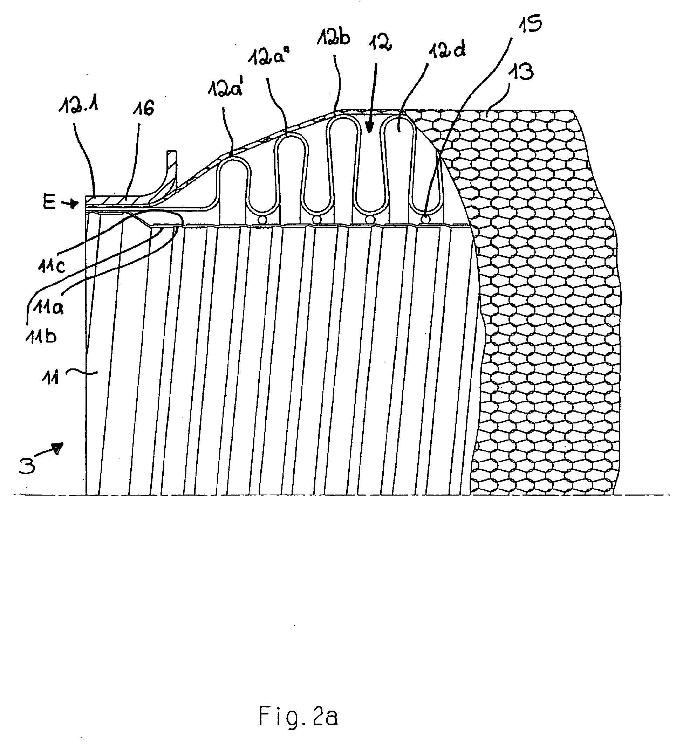

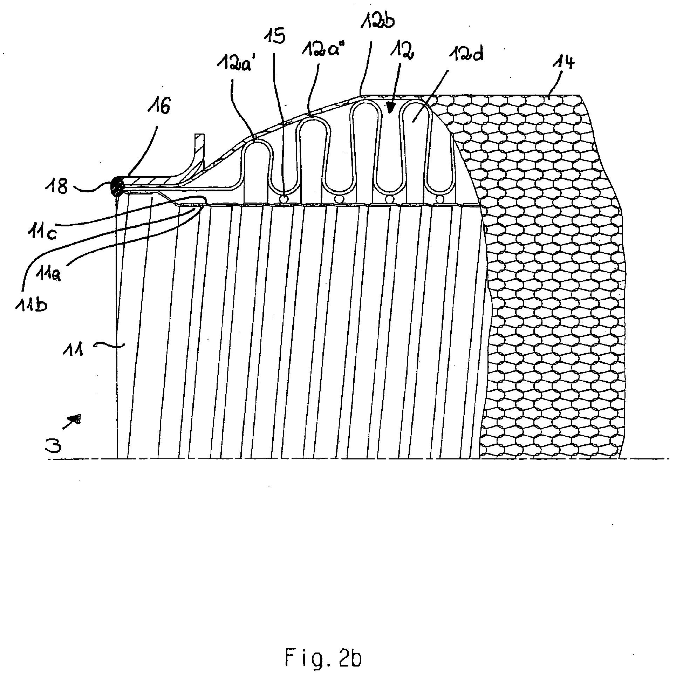

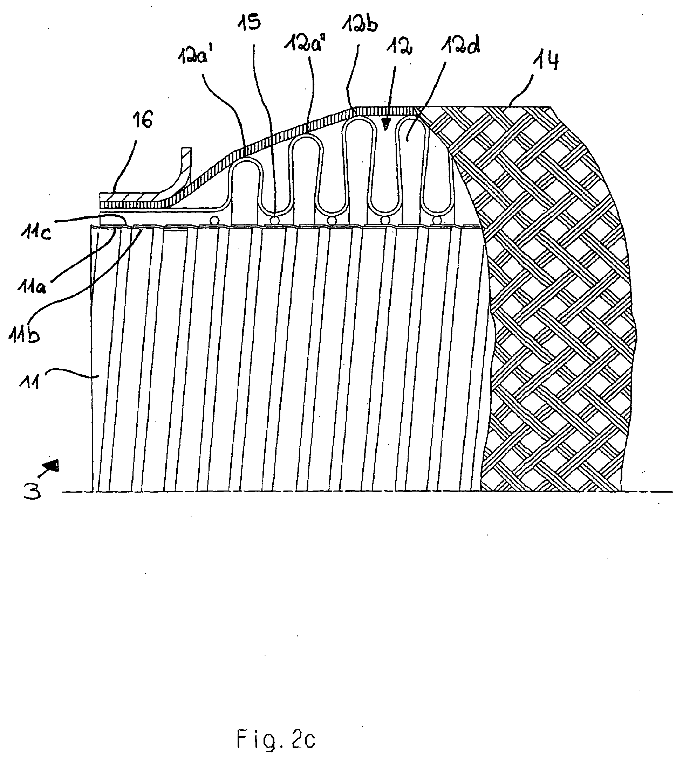

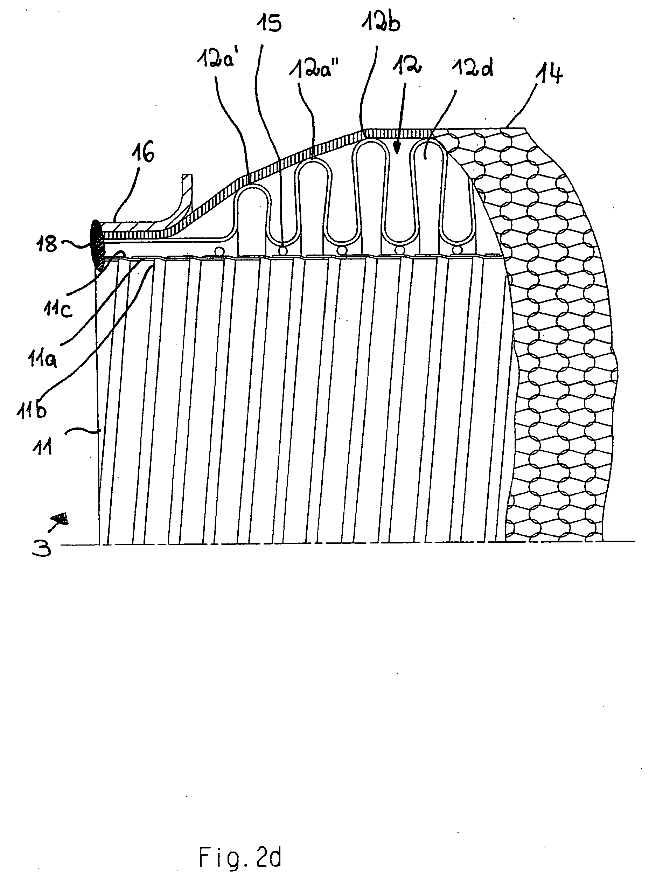

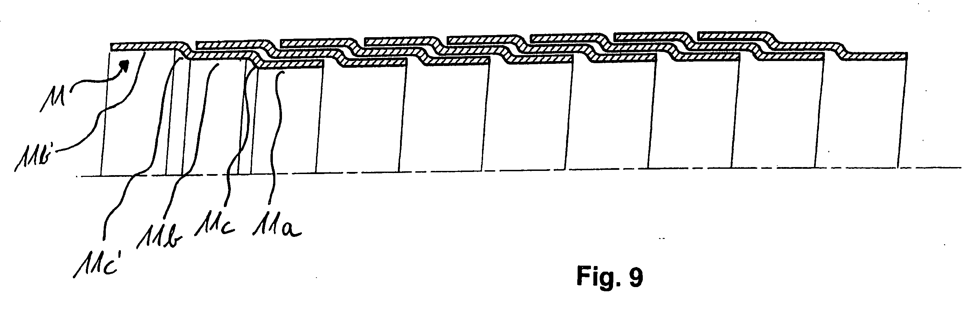

Die Figuren 2 bis 8 zeigen zunächst Teillängsschnittdarstellungen durch erfindungsgemäß vorgesehene flexible Leitungselemente und deren prinzipiellen Aufbau, wobei der Aufbau des Schlauches lediglich schematisch dargestellt ist und wobei im Hinblick auf erfindungsgemäße Ausgestaltungen des Schlauches auf die Fig. 9 bis 14 verwiesen wird.

Die erfindungsgemäßen flexiblen Leitungselemente 3 weisen (Fig. 2) den radialen Aufbau folgender sich jeweils über ihre gesamte Länge hin erstreckender Elemente auf:

Im Inneren befindet sich ein (Wickel-)Schlauch 11. Dieser ist koaxial von einem Wellschlauch oder Balg 12 umgeben, der wiederum von einem Geflechtschlauch 14 und/oder einem Gestrickeschlauch 13 umfasst ist. Zwischen Wellschlauch 11 und Balg 12 können grundsätzlich weitere Elemente in Form von Gewebe- oder Gestrickeschläuchen oder aber Abstandhalter 15 angeordnet sein, wie sie z.B. aus der DE 200 17 036 U1 bekannt sind.

Der Balg 12 kann entweder schraubenförmig gewellt oder aber ringgewellt sein. In den Figuren sind jeweils ringgewellte Bälge dargestellt. Der Wickelschlauch 11 besteht aus einem oder mehreren schraubenförmig gewickelten Metallbändern, vorzugsweise aus Profilbändern, wie sie weiter unten unter Bezugnahme auf Fig. 9 bis 14 im Einzelnen beschrieben sind. Grundsätzlich kann auch der Schlauch 11 aus axial aufeinanderfolgenden teilweise überlappenden Ringen bestehen. Aufgrund der notwendigen Verschweißung jeden Ringes an den Stirnseiten des ihn bildenden Bandabschnitts ist dis aber mit einem solchen Aufwand verbunden, dass man in der Praxis schraubenförmige gewickelte Wickelschläuche einsetzen wird.

An den Enden der Leitungselemente 3 ist jeweils ein Ringteil 16 aufgesetzt (Fig. 2), an dem Balg 12, Überzug 13 und gegebenenfalls Abstandhalter 14 und Winkelschlauch 11 - direkt oder indirekt, kraft- oder formschlüssig - festgelegt sind. Hierauf wird weiter unten näher eingegangen.

Bei der Ausgestaltung der Fig. 2 weist die erste Welle 12a des Balgs 12 (an beiden Enden) eine reduzierte (radiale) Höhe gegenüber dem sonstigen (Haupt-)Abschnitt 12b des Balgs 12 auf. Weiterhin ist diese Welle 12a in ihrem Fußbereich 12c gegenüber dem Fußbereich 12d der anderen Welle verbreitert und weist im dargestellten Ausführungsbeispiel die dreifache Breite auf. Durch einen radialen Anstieg des Balgs 12 im Endbereich werden die auf die erste Hauptwelle 12b wirkenden axialen Kräfte vermindert und damit vermieden, dass diese axial auf die zur Mitte hin benachbarte Welle gebogen wird. Durch eine verbreiterte Anfangswelle 12a wird dies in fertigungstechnisch einfacher und kostengünstiger Weise erreicht.

Zwischen dem Wickelschlauch 11 und dem Balg 12 ist ein Abstandhalter 15, wie er weiter unten genauer beschrieben wird, angeordnet.

Die Fig. 2a bis 2d zeigen in gleicher Darstellung ähnliche Ausgestaltungen wie die Fig. 2. Bei den Fig. 2a, 2b ist der Balg 12 lediglich von einem Gestrickeschlauch 13, bei Fig. 2b von einem Geflechtsschlauch 14 umfasst. Weiterhin sind bei beiden Ausgestaltungen statt der endständigen Welle zwei Wellen 12a', 12a'' mit reduzierter radialer Erstreckung, aber gleicher Breite wie die Welle 12b vorgehen, wobei die radiale Erstreckung der äußeren Welle 12a' geringer ist als der der Welle 12a''. Hiermit wird die gleiche Wirkung wie bei der Welle 12a erreicht, allerdings mit erhöhtem Fertigungs- und Kostenaufwand. Der Wickelschlauch 11 ist in der Fig. 2a im Endbereich E bis zum Innenradius des Balgendes 12.1 aufkalibriert und wird derart dort reibschlüssig gehalten. Zunächst kann er mit Balgende 12.1, Überzug 13 und aufgesetztem Ringteil 16 verschweißt sein (Fig. 2b). Der Abstandhalter 15 endet bei den Ausgestaltungen der Fig. 2 bis 2b mit axialem Abstand zum Balgende 12.1 und ist bei diesen Ausgestaltungen nicht im Endbereich des Leitungselements fixiert, sondern wird lediglich zwischen Inliner (Wickelschlauch 11) und Balg 12 gehalten.

Der Ring 16 sowie die Enden der Überzüge 13, 14, Balg 12 und Inliner 11 sind immer miteinander verbunden, auch wenn dies nicht dargestellt ist. Alternativ zu der vorstehend unter Bezug auf die Fig. 2 erläuterten Ausgestaltung durch gemeinsames Kalibrieren, d.h. radiales Aufweiten, der die Enden bildenden Teile, wodurch sich eine kraftschlüssige Verbindung der Teile untereinander ergibt, kann dies auch durch Verstemmen der die Enden bildenden Teile, d.h. durch Herstellung eines in axialer Richtung wirkenden Formschlusses im Bereich der Enden, welcher umlaufend oder segmentartig ausgeführt sein kann, durch umlaufendes oder unterbrochenes (= segmentartiges) Verschweißen, also durch eine stoffschlüssige Verbindung, der Bauteile miteinander oder durch Kombinationen der beiden vorstehenden Ausgestaltungen geschehen.

Bei den Fig. 2c, 2d. ist der Abstandhalter 15 bis in den Endbereich des Leitungselements 3 geführt und - ohne Kalibrierung - derart stoffschlüssig über eine Verschweißung 18 mit Ring 16, Überzug 13, Balg 12 und Inliner 11 verbunden.

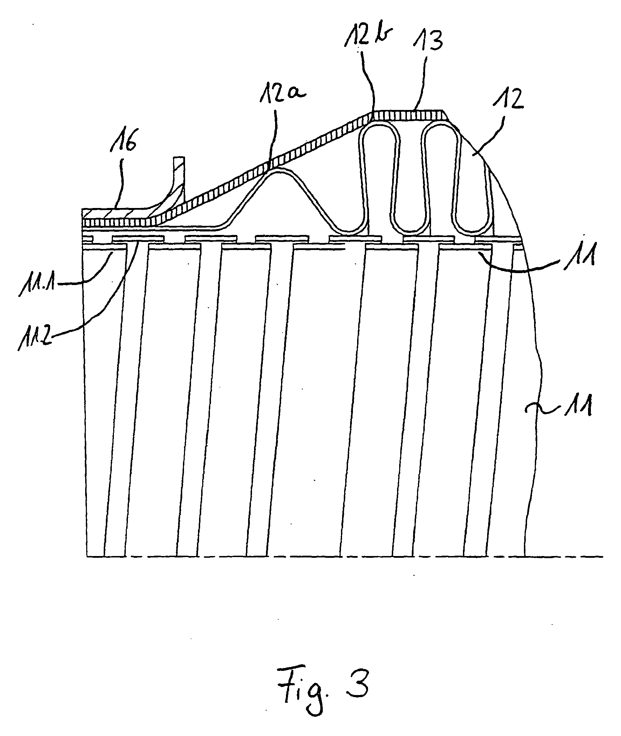

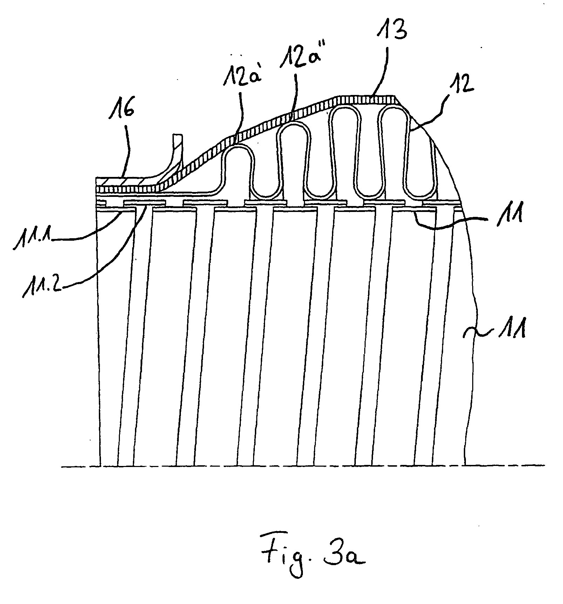

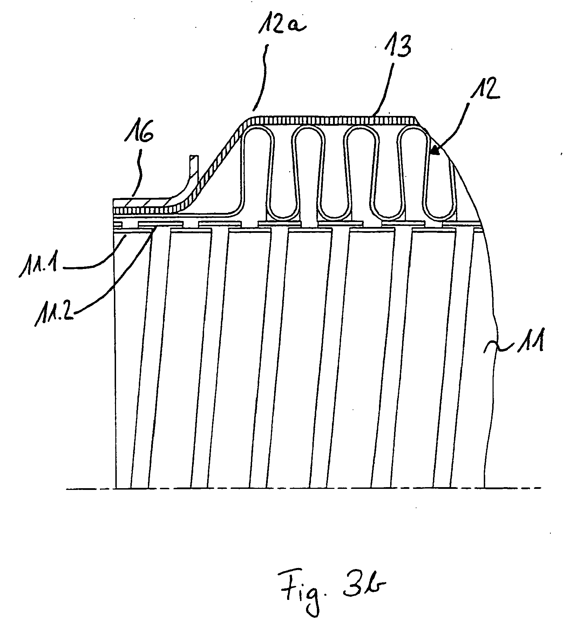

Die Fig. 3 zeigt eine grundsätzlich der Fig. 2 entsprechende Ausgestaltung mit einem Balg 12 mit verbreiterter Endwelle 12a, einem Überzug 13, einem Ringteil 16 und einem innerhalb des Balgs befindlichen Wickelschlauch 11. Zwischen Balg 12 und Wickelschlauch 11 ist kein Abstandhalter vorgesehen; der Wickelschlauch 11 liegt unmittelbar am Balg 12 an und wird durch diesen "in Form" gehalten.

Die Ausgestaltungen der Fig. 3a und 3b entsprechen im Wesentlichen der der Fig. 3. Bei der Fig. 3a sind lediglich zwei Anstiegswellen 12a', 12a" mit unterschiedlichem, ansteigendem Radius entsprechend den Fig. 2a, 2b vorhanden, während bei der Fig. 3b keine solchen Eingangswellen mit unterschiedlichem Radius vorhanden sind, sondern der Balg 12 über seine gesamte Länge hin und über alle Wellen hin den gleichen Durchmesser aufweist.

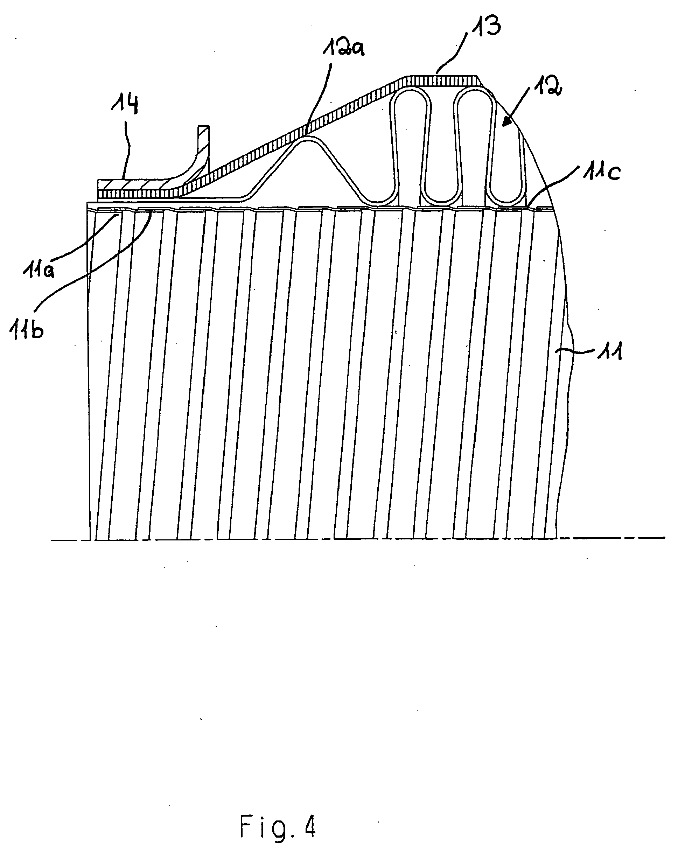

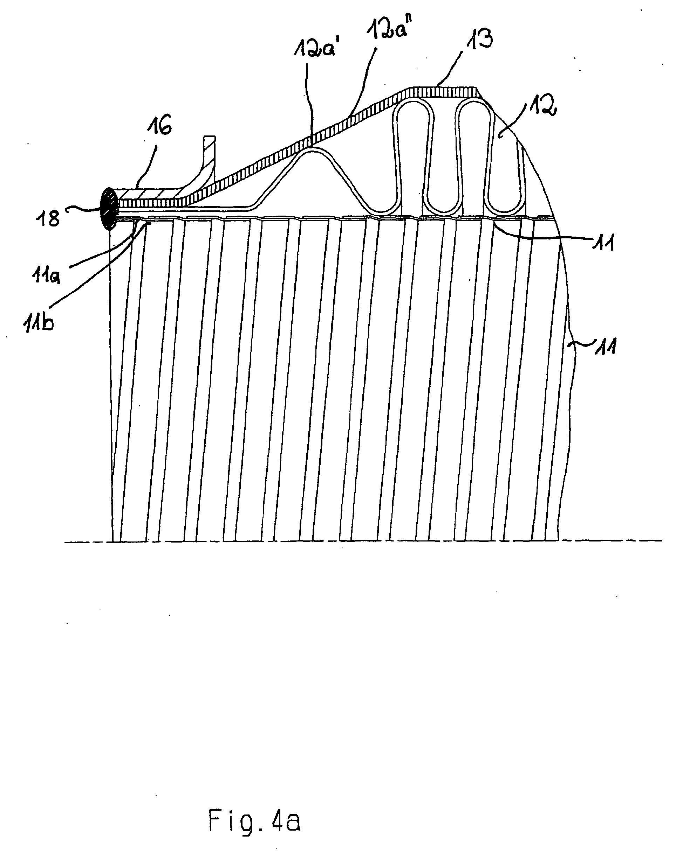

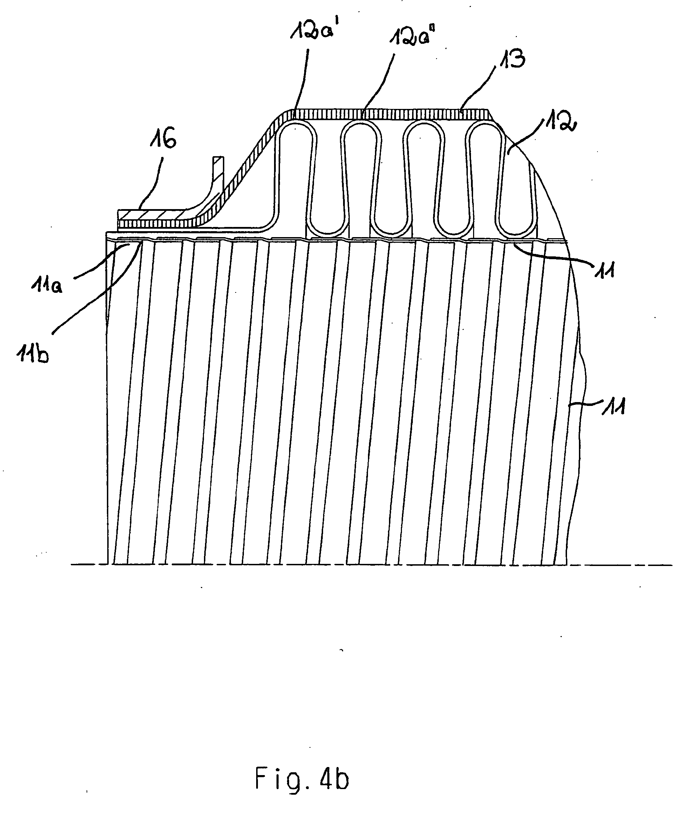

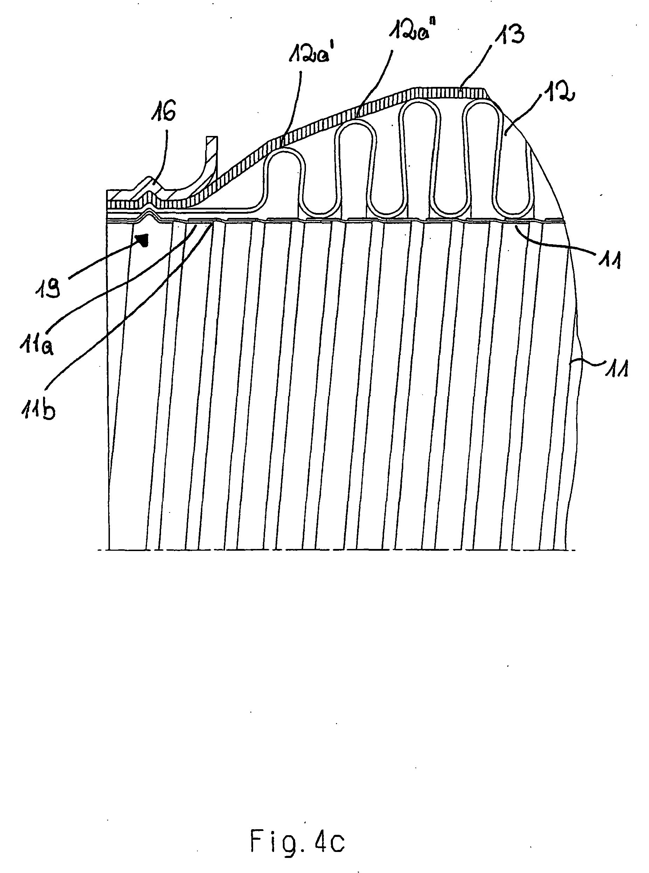

Die Ausgestaltung der Fig. 4 entspricht im Wesentlichen der gemäß Fig. 2, abgesehen davon, dass keine Abstandhalter zwischen Wickelschlauch 11 und Balg 12 vorhanden sind. Letzteres gilt auch für die Ausgestaltungen der Fig. 4a und 4b, die hinsichtlich der endseitigen Ausbildung des Balgs 12 der Fig. 3a bzw. der Fig. 3b entsprechen. Bei der Ausgestaltung der Fig. 4a ist wiederum eine stoffschlüssige Verbindung durch Verschweißen 18 von Ring 16, Überzug 13, Balg 12 und Inliner 11 dargestellt.

Die Fig. 4c zeigt eine Ausgestaltung entsprechend der gemäß Fig. 4a, wobei allerdings die Endverbindung von Ring 16, Überzug 13, Balg 12 und Inliner 11 nicht durch Verschweißen, sondern durch eine in axialer Richtung wirksame Formschlussverbindung 19 erfolgt, welche umlaufend oder segmentartig ausgeführt sein kann. Dies geschieht durch Verstemmen der die Enden bildenden Abschnitte von Inliner 11, Balg 12, Überzug 13, Ring 16 vorzugsweise von innen her.

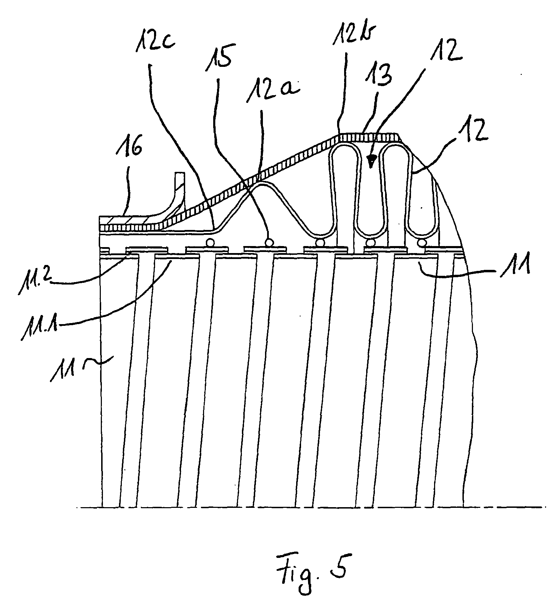

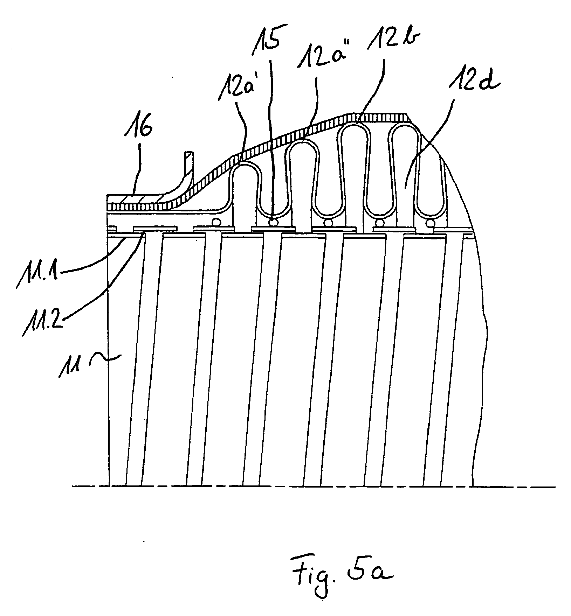

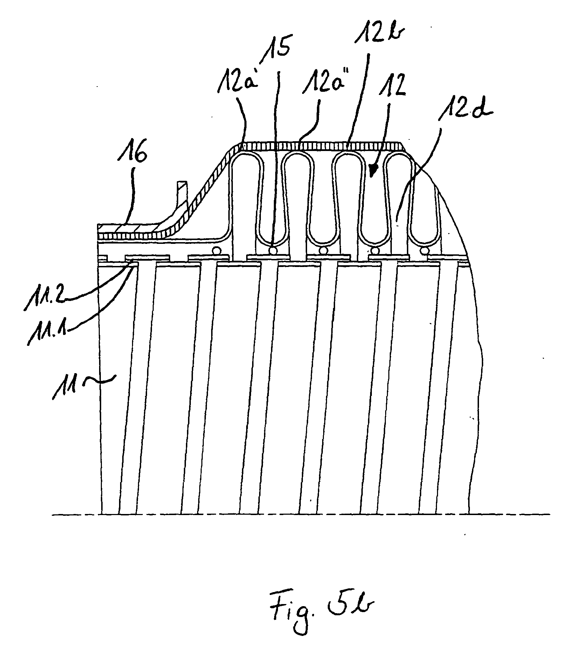

Die Ausgestaltung der Fig. 5 entspricht im Wesentlichen der gemäß Fig. 3, abgesehen davon, dass nun hier ein Abstandhalter 15 zwischen Balg 12 und Wickelschlauch 11 in der Form einer vorzugsweise schraubenförmig mit Abstand um den Wickelschlauch 11 gewickelten Metallschnur vorhanden ist, wie ein solcher Abstandhalter 15 detailliert in der schon erwähnten DE 200 17 036 U1 beschrieben ist, auf die insofern ausdrücklich verwiesen und die in dieser Hinsicht vollständig zum Gegenstand der vorstehenden Offenbarung gemacht wird.

Die Ausgestaltungen der Fig. 5a und 5b entsprechen bis auf die Vorsehung eines Abstandhalters 15 entsprechend der Ausgestaltung der Fig. 5 denen der Ausgestaltungen 3a, 3b.

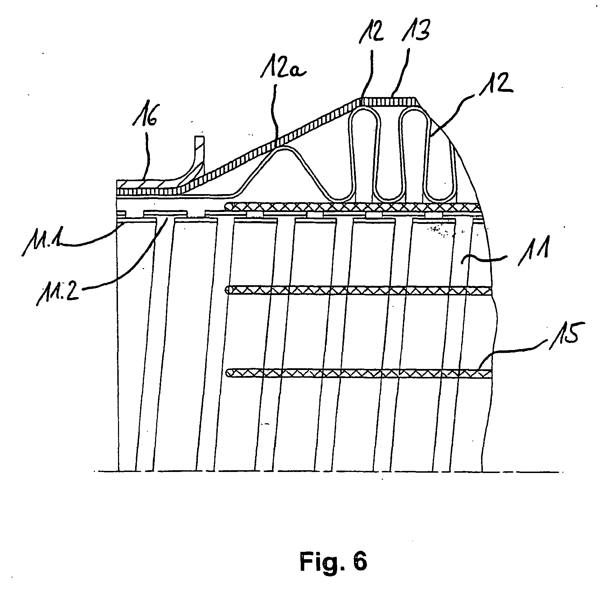

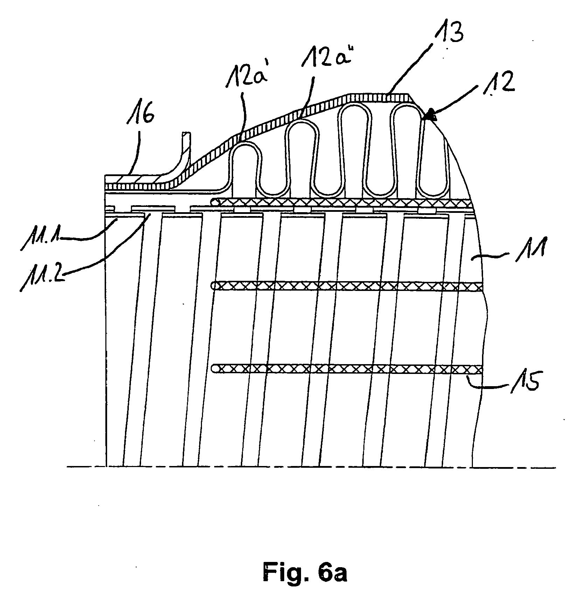

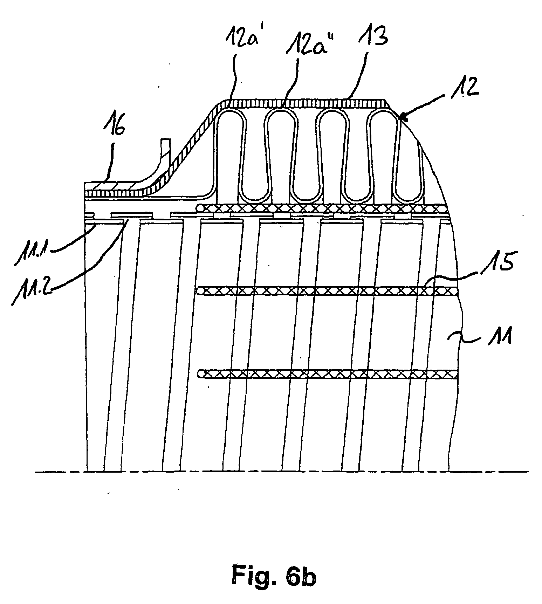

Die Ausgestaltung des flexiblen Leitungselementes 3 der Fig. 6 entspricht im Wesentlichen der gemäß Fig. 5, abgesehen davon, dass der Abstandhalter 15 hier nicht durch eine oder mehrere schraubenförmig gewickelte Schnüre ausgebildet ist, sondern der Abstandhalter 15 zwischen Wickelschlauch 11 und Balg 13 durch sich achsparallel erstreckende Schnüre (Metallgestricke, -gewebe oder -geflecht oder dergleichen) gebildet sind, die in an sich gleicher Weise ausgestaltet sein können wie der Abstandhalter 15 der Fig. 3 ff. und wie sie ebenfalls in der schon erwähnten DE 200 17 036 U1 beschrieben sind.

Die Ausgestaltungen der Fig. 6a und 6b unterscheiden sich wiederum entsprechend denen der Fig. 5a, 5b lediglich durch die Ausbildung der Enden des Balgs 12 von der Ausgestaltung der Fig. 6.

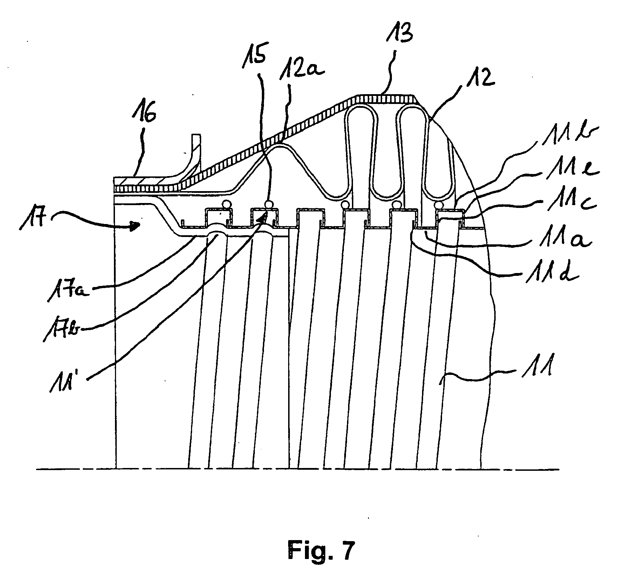

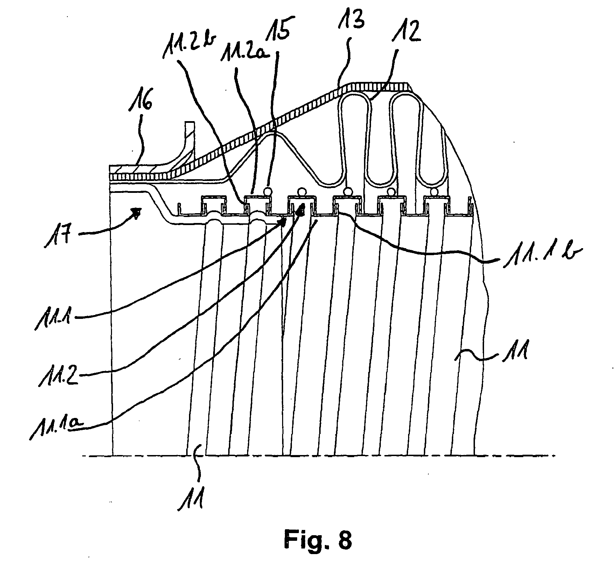

Bei den Ausgestaltungen der Fig. 7 und 8 entsprechen die Ausgestaltungen des Balgs 12, des Überzugs 13, des Abstandhalters 15 sowie des Endrings 16 denjenigen der Ausgestaltungen der Fig. 5. Während die relativ flachen Wickelschläuche 11 der vorstehend beschriebenen Figuren im Endbereich, auf der axialen Höhe des Endrings 16 durch Verpressen und/oder Verschweißen indirekt mit dem Endring 16 über Balg 12 und Überzug 13 verbunden sein können, unterscheiden sich die Ausgestaltungen der Fig. 7 und 8 von den vorstehend beschriebenen Ausgestaltungen einerseits durch eine unterschiedliche Ausgestaltung des Wickelschlauches 11 und andererseits durch eine unterschiedliche Ausgestaltung zur Festlegung desselben gegenüber der vorstehend skizzierten.

Bei der Ausgestaltung der Fig. 7 handelt es sich um einen Wickelschlauch 11 aus einem schraubenförmig gewickelten Profilband mit im Querschnitt zwei axial aufeinanderfolgenden, radial zueinander versetzten Abschnitten 11a, 11b, die durch einen Verbindungsabschnitt 11c mit radialer Erstreckungskomponente, im dargestellten Ausführungsbeispiels einem sich exakt radial erstreckenden Verbindungsabschnitt 11c an ihren einander zugewandten Enden verbunden sind. Insofern entspricht der Wickelschlauch 11 der Fig. 7 im Wesentlichen dem der Fig. 2, allerdings mit einer größeren radialen Höhe.

Darüber hinaus weist der Wickelschlauch der Fig. 7 allerdings an seinen freien, voneinander abgewandten Enden der Abschnitte 11a, 11b ebenfalls mit im Querschnitt radialer Erstreckungskomponente abgebogene Abschnitte 11d, 11e auf, wobei der sich an den radial innen liegenden Axialabschnitt 11a anschließende Radialabschnitt 11d radial nach außen gebogen ist, während der sich an den radial außen liegenden Axialabschnitt 11b anschließende Radialabschnitt 11d radial nach innen gebogen ist. Die Abschnitte 11d, 11e zweier aufeinanderfolgender Windungen des gewickelten Profilbandes des Wellschlauchs 11 hintergreifen einander in axialer Richtung, wie dies in der Fig. 7 dargestellt ist.

Die Festlegung des Wickelschlauches 11 der Fig. 7 kann entweder, wie oben unter Bezug auf die anderen Ausführungen beschrieben, stoff- oder kraftschlüssig, beispielsweise durch Verschweißen erfolgen. Die Festlegung kann aber auch formschlüssig erfolgen, wie dies in der Fig. 7 (und auch der Fig. 8) dargestellt ist.

Hierzu weist ein in das flexible Leitungselement hineinragendes Anschlussrohrstück 16 ein radial verjüngtes, bis in den Wellschlauch hineinragendes Teil 17a auf, das außenseitig mindestens eine sich nach außen hin erweiternde Welle 17b hat, die in Nuten 11' des Wickelschlauchs 11 eingreifen. Die Wellen 17b können sich über einen Umfang von 360° oder mehr, bis beispielsweise zu drei Schraubengängen erstrecken. Alternativ kann der Ansatz 17a radiale Flansche oder über den Umfang hin mit umfangsmäßigem Abstand angeordnete Noppen aufweisen.

Die Ausgestaltung der Fig. 8 unterscheidet sich von der gemäß Fig. 7 lediglich durch die Ausgestaltung des Wickelschlauches. In der Ausgestaltung der Fig. 8 ist dieser nicht durch ein einziges schraubenförmig gewickeltes Band gebildet, sondern durch zwei Bänder 11.1, 11.2, wobei die Querschnittskontur der Ausgestaltung der Fig. 7 nachgeahmt wird. Die beiden den Wickelschlauch 11 der Fig. 8 bildenden Profilbänder 11.1, 11.2 weisen im Querschnitt jeweils ein U-förmiges Profil mit sich axial erstreckenden Stegabschnitten 11.1a, 11.2a und sich beiderseits vom innen liegenden Stegabschnitt 11.1a radial nach außen erstreckenden Schenkeln 11.1b bzw. vom radial außen liegenden Stegabschnitt 11.2a radial nach innen erstreckenden Schenkel 11.2b auf, wobei sich die Stegabschnitte 11.1a, 11.2a axial überlappen und die Schenkel 11.1b, 11.2b einander axial hintergreifen, so dass eine hinreichende Flexibilität und Längenänderungsmöglichkeit des Wickelschlauches 11 ebenso gegeben ist, wie dies bei den anderen beschriebenen Ausgestaltungen der Fall ist.

Grundsätzlich können bei den Ausgestaltungen der Wickelschläuche und der endständigen Festlegung derselben entsprechend den Fig. 7 und 8 die Ausbildungen der Balgenden ebenfalls in der beispielsweise in den Fig. 3a, 3b gezeigten Weise sein. Weiterhin kann statt einem schraubenförmig mit Abstand gewickelten Abstandhalter 15 auch entweder kein Abstandhalter (beispielsweise Fig. 3), oder ein Abstandhalter in Form von Längsstreifen (beispielsweise Fig. 6) oder aber auch, wie dies auch bei den weiteren vorstehend beschriebenen Ausgestaltungen grundsätzlich der Fall sein kann, ein schlauchförmiger Abstandhalter aus Metallgestrikke, -gewebe, -geflecht vorgesehen sein.

Entsprechende Variationen mit den Wickelschlauchausbildungen der Fig. 7 und 8 sowie der formschlüssigen Anbindung desselben im Endbereich sind im einzelnen nicht dargestellt, liegen aber im Rahmen des Erfindungsgegenstandes.

Die Wickelschläuche 11 des erfindungsgemäßen flexiblen Leitungselements 3 werden aus (Profil)-Bändern hergestellt, wobei Querschnitte von im Rahmen der Erfindung vorgesehenen (Profil-)Bändern in den Fig. 9 bis 14 dargestellt sind. Die Figuren 9 bis 14 zeigen dabei in vergrößerter Darstellung erfindungsgemäße Ausgestaltungen der Wickelschläuche 11, wie sie erfindungsgemäß in einem Leitungselement 3 gemäß Fig. 2 bis 8 zum Einsatz kommen. Die Figuren zeigen, dass und wie sich die einzelnen Windungen des Wickelschlauchs in radialer Richtung, insbesondere mit achsparallelen Abschnitten, berühren.

Das Material der Metallbänder 11.1, 11.2 des Wickelschlauches 11 kann grundsätzlich unterschiedlich sein, ebenso deren Stärke oder auch die Breite der Bänder.

Die Fig. 9 zeigt ein Ausführungsform eines Wickelschlauchs 11 mit den Merkmalen des Anspruchs 2. Das den Wickelschlauch 11 der Fig. 9 bildende Profilband ist im Querschnitt stufenförmig ausgebildet mit drei - in gewickeltem Zustand - axial aufeinanderfolgenden, sich axial also nicht überlappenden, nämlich zueinander versetzten Abschnitten 11a, 11b, 11b' und einem diese an ihren einander zugewandten Enden verbindenden Abschnitt 11c, 11c' mit radialer Komponente. Der Wickelschlauch 11 besteht also aus einem Profilband mit im Querschnitt sich axial erstreckenden, radial versetzt zueinander angeordneten Bandabschnitten 11a, 11b, 11b', die durch einen Bandabschnitt 11c, 11c' mit im Querschnitt radialer Erstreckungskomponente miteinander verbunden sind, wobei im dargestellten Ausführungsbeispiel sich der Abschnitt 11c, 11c' unter einem Winkel von etwa 45° zur Achse erstreckt, aber auch exakt radial ausgerichtet sein oder flacher zur Achse hin verlaufen könnte. Der Wickelschlauch 11 besteht folglich aus einem Band, allerdings mit radial zueinander versetzten, axial aufeinanderfolgenden, sich bei jeweils einem Band nicht überlappenden in axial erstreckenden Abschnitten 11a, 11b, 11b', wobei die Abschnitte 11a, 11b in der vorstehend beschriebenen Weise durch einen Abschnitt 11c mit radialer Komponente und die Axialabschnitte 11b, 11b' durch einen Abschnitt 11c' mit radialer Komponente verbunden sind.

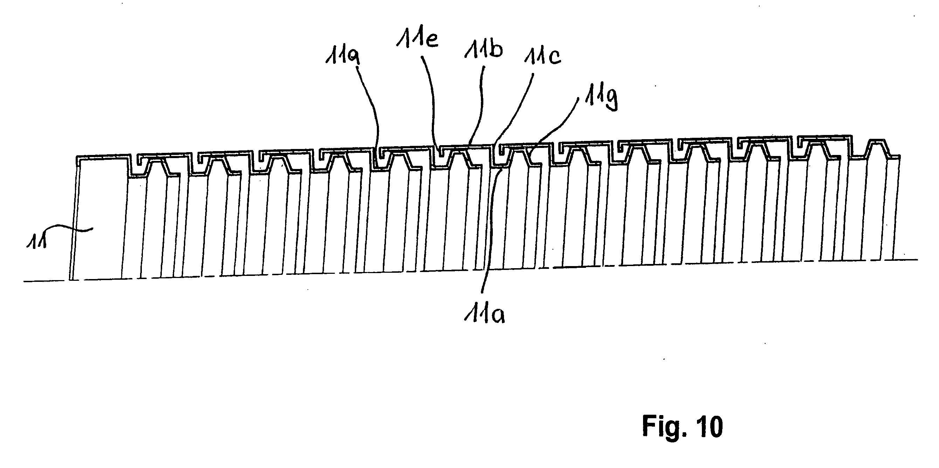

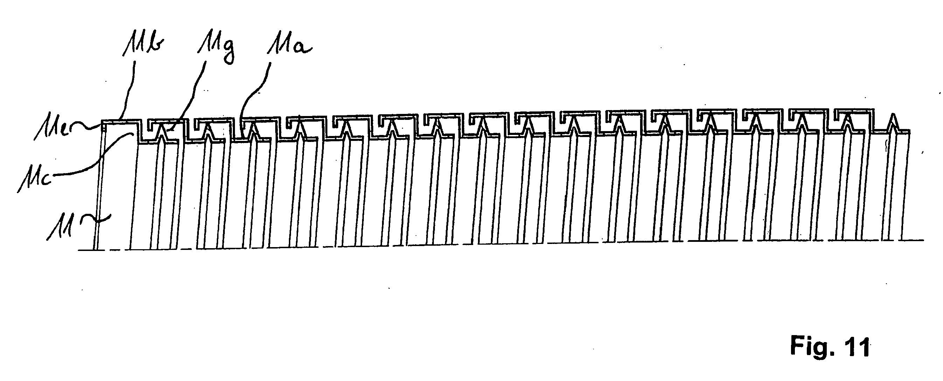

Die Ausgestaltung des den Wickelschlauch 11 bildenden Profilbandes der Fig. 10 bzw. 11 besitzt die Merkmale der Ansprüche 4 (Fig. 11) bzw. 5 (Fig. 10). Das Band weist in beiden Fällen im Querschnitt wiederum zwei radial zueinander versetzte, axial aufeinanderfolgende, sich axial erstreckende Abschnitte 11a, 11b auf, die durch einen sich im Querschnitt mit radialer Komponente erstreckenden Bandabschnitt 11c miteinander verbunden sind. An den Seiten der Bandabschnitte 11a, 11b befinden sich wiederum im Wesentlichen parallel zu dem Bandabschnitt 11c gerichtete Bandabschnitte 11e. Die Bandabschnitte 11e benachbarter Windungen des Bandes hintergreifen einander in axialer Richtung und bilden den Wickelschlauch. Beim dargestellten Ausführungs-beispiel umfasst ein den Wickelschlauch 11 bildender Strang also Abschnitte 11a bis 11e, nämlich zwei in versetzten Ebenen angeordnete, parallel zueinander verlaufende Axialabschnitte 11a, 11b. Weiterhin weist der Querschnitt Abschnitte 11c, 11e auf, die zum Bilden des Wellschlauches eine Radialkomponente in ihrer Quererstreckung aufweisen.

Bei der Ausgestaltung der Fig. 10 weist der radial innen liegende Axialabschnitt 11a eine radial nach außen gerichtete Ausformung 11g - hier im Schnitt trapezförmig - auf, auf der der radial außen liegende Axialabschnitt 11b sich abstützt und die durch den am freien Ende des radial außen liegenden Axialabschnitts 11b radial nach innen ragenden Abschnitt 11e hintergriffen wird.

Eine ähnliche Ausformung 11g ist bei der Ausgestaltung der Fig. 11 vorgesehen, doch ist diese lediglich spitzwinklig ausgebildet und weist die Form eines Dreiecks auf (im Gegensatz zu der Querschnittsform eine Trapezes der Fig. 10). Ansonsten entspricht die Ausgestaltung der Fig. 11 der gemäß Fig. 10.

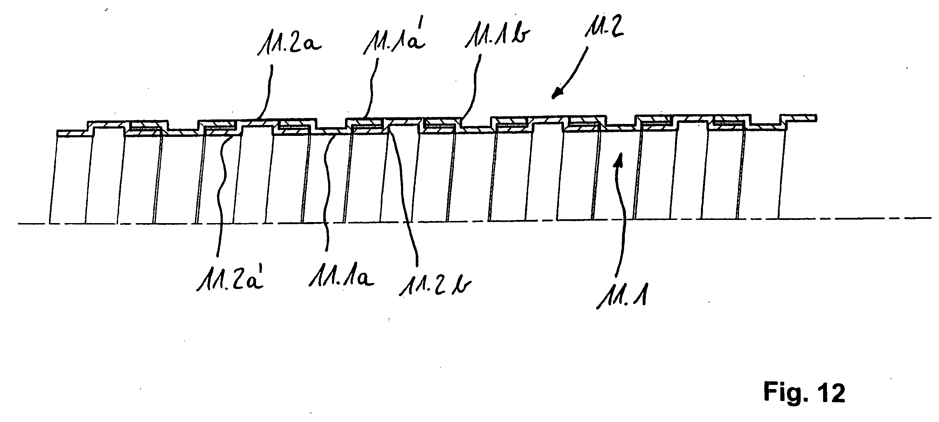

Die Fig. 12 bis 14 zeigen aus zwei Profilbändern 11.1, 11.2 gewickelte Wickelschläuche 11. Bei allen diesen Ausgestaltungen gilt, wie schon oben angedeutet, dass die beiden Bänder 11.1, 11.2 aus unterschiedlichen Materialien bestehen können und verschiedene unterschiedliche Stärke haben können, abgesehen davon, dass sie, wie dies nachfolgend noch zum Teil ersichtlich ist, auch unterschiedlich Breite aufweisen können.

Bei der Ausgestaltung der Fig. 12, welche die Merkmale des Anspruchs 1 aufweist, schließen sich an den den mittleren Axialabschnitten 11.1a, 11.2a der beiden den Wickelschlauch 11 bildenden Bänder abgewandten Enden der Radialabschnitte oder -schenkel 11.1a, 11.2a jeweils ebenfalls sich im Querschnitt axial erstreckende Abschnitte 11.1a', 11.2a' an, wobei die Abschnitte 11.1a' auf der radialen Höhe des Axialabschnitts 11.2a und die Abschnitte 11.2a' auf der radial (innen liegenden) Höhe des Abschnittes 11.1a liegen. Die Abschnitte 11.1a', 11.2a' benachbarter Bänder liegen in radialer Richtung übereinander.

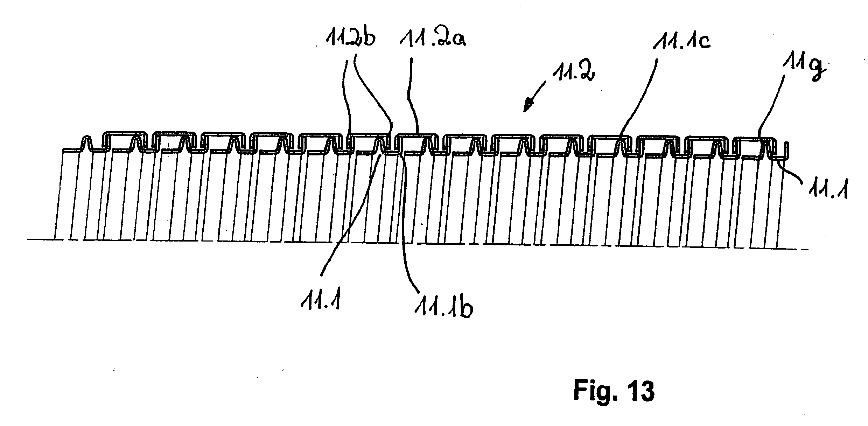

Bei der Ausgestaltung der Fig. 13, welche die Merkmale des Anspruchs 9 aufweist, ist das äußere Band 11.2 U-förmig ausgebildet und umfasst einen U-Steg 11.2a sowie seitlich an diesen anschließende Schenkel 11.2b. Die Schenkel 11,1b und 11.2b benachbarter Bänder hintergreifen dabei einander, um so den Wickelschlauch zu bilden. Das innere Band 11.1 weist eine radial nach außen gerichtete Ausformung 11g auf, auf der das äußere Profilband 11.2 sich abstützt, wie dies bei einem aus einem Band gebildeten Wickelschlauch unter Bezug auf die Fig. 11 schon erläutert wurde.

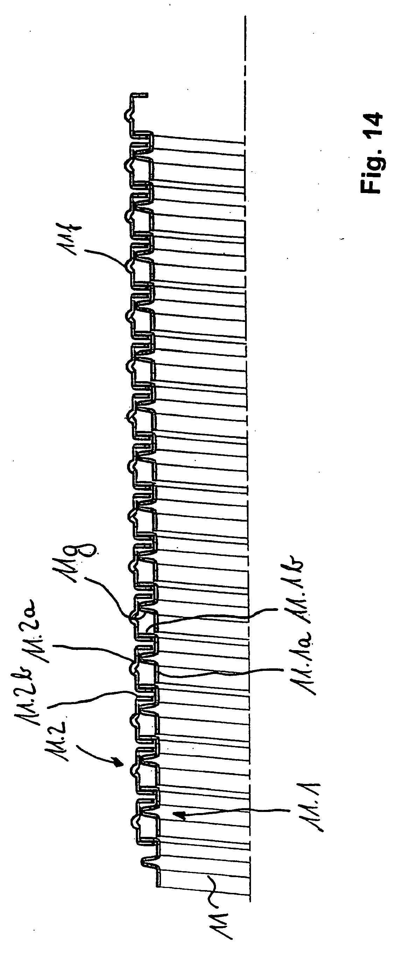

Insbesondere wenn das erfindungsgemäße flexible Leitungselement keine Abstandhalter zwischen Wickelschlauch 11 und Balg 12 aufweist, kann in bevorzugter Ausgestaltung vorgesehen sein, dass ein ansonsten in seiner Querschnittskontur dem Band der Fig. 13 entsprechendes, den Wickelschlauch 11 bildendes Band in seinem radial äußeren Axialabschnitt 11.2a eine Auswölbung oder Ausformung 11f aufweist, um so den Kontakt zum umgebenden Balg 12 auf einer definierten (achsparallelen) Linie zu gestalten. Die Ausgestaltung der Fig. 14 unterscheidet sich folglich von der gemäß Fig. 13 lediglich dadurch, dass zusätzlich das äußere Band 11.2 mit einer radial nach außen ragenden Aufwölbung 11f ausgestattet ist, so dass der Balg 12 in einer achsparallelen Linie auf dem Wickelschlauch aufliegt.

## Patentansprüche

1. Flexibles Leitungselement (3), insbesondere für Abgasleitungen (1) von Verbrennungsmotoren bei Kraftfahrzeugen, mit mindestens einem Balg (12) und wenigstens einem innerhalb des Balgs (12) koaxial angeordneten, überlappende Windungen aufweisenden Schlauch (11), insbesondere Metallschlauch, wobei die Windungen einander in radialer Richtung berühren und der Schlauch (11) durch den Balg (12) radial direkt oder indirekt gehalten wird, **gekennzeichnet durch** einen Schlauch (11) bestehend aus zwei Profilbändern (11.1, 11.2), die jeweils drei im gewickelten Zustand in axialer Richtung hintereinander angeordnete, achsparallele Abschnitte aufweisen, von denen der mittlere (11.1a, 11.2a) radial zu den beiden Randabschnitten (11.1a', 11.2a') versetzt ist, und wobei benachbarte achsparallele Abschnitte (11.1a, 11.1a'; 11.2a, 11.2a') einer Windung **durch** Abschnitte (11.1b, 11.2b) mit radialer Erstreckungskomponente verbunden sind sowie achsparallele Randabschnitte (11.1a', 11.2a') benachbarter Windungen des einen und des anderen Bandes (11.1, 11.2) einander axial überlappen und radial übereinander angeordnet sind.

2. Flexibles Leitungselement (3), insbesondere für Abgasleitungen (1) von Verbrennungsmotoren bei Kraftfahrzeugen, mit mindestens einem Balg (12) und wenigstens einem innerhalb des Balgs (12) koaxial angeordneten, überlappende Windungen aufweisenden Schlauch (11), insbesondere Metallschlauch, wobei die Windungen einander in radialer Richtung berühren und der Schlauch (11) durch den Balg (12) radial direkt oder indirekt gehalten wird, wobei der Schlauch (11) durch ein Profilband mit im Querschnitt mindestens zwei, im gewickelten Zustand radial zueinander versetzten, axial aufeinanderfolgenden achsparallelen Abschnitten (11a, 11b) gebildet ist, die durch einen Verbindungsabschnitt (11c) mit zumindest radialer Erstreckungskomponente verbunden sind, **gekennzeichnet durch** drei im gewickelten Zustand jeweils radial zueinander versetzte, axial aufeinanderfolgende und sich bei jeweils einem Band nicht überlappende Axialabschnitte (11a, 11b, 11b') des Querschnitts des Bandes, wobei jeweils aufeinanderfolgende Axialabschnitte (11a, 11b; 11b, 11b') **durch** Verbindungsabschnitte (11c, 11c') mit radialer Komponente verbunden sind.

3. Leitungselement nach Anspruch 2, **dadurch gekennzeichnet, dass** die Abschnitte (11c, 11c') mit radialer Komponente senkrecht ausgerichtet sind.

4. Flexibles Leitungselement (3), insbesondere für Abgasleitungen (1) von Verbrennungsmotoren bei Kraftfahrzeugen, mit mindestens einem Balg (12) und wenigstens einem innerhalb des Balgs (12) koaxial angeordneten, überlappende Windungen aufweisenden Schlauch (11), insbesondere Metallschlauch, wobei die Windungen einander in radialer Richtung berühren und der Schlauch (11) durch den Balg (12) radial direkt oder indirekt gehalten wird, wobei der Schlauch (11) durch ein Profilband mit im Querschnitt mindestens zwei, im gewickelten Zustand radial zueinander versetzten, axial aufeinanderfolgenden achsparallelen Abschnitten (11a, 11b) gebildet ist, die durch einen Verbindungsabschnitt (11c) mit zumindest radialer Erstreckungskomponente verbunden sind, und wobei die Axialabschnitte (11a, 11b) an mindestens einem ihrer einander abgewandten freien Enden mit sich jeweils auf die Radialebene des anderen Axialabschnittes (11b, 11a) zu erstreckenden Abschnitten (11e) mit zumindest radialer Komponente versehen sind, **gekennzeichnet durch** eine sich nach außen erstreckende radiale Ausformung (11g) des inneren achsparallelen Bandabschnittes (11a), auf dem der äußere achsparallele Bandabschnitt (11b) aufliegt, wobei die Ausformung (11g) spitzwinklig ausgebildet ist.

5. Flexibles Leitungselement (3), insbesondere für Abgasleitungen (1) von Verbrennungsmotoren bei Kraftfahrzeugen, mit mindestens einem Balg (12) und wenigstens einem innerhalb des Balgs (12) koaxial angeordneten, überlappende Windungen aufweisenden Schlauch (11), insbesondere Metallschlauch, wobei die Windungen einander in radialer Richtung berühren und der Schlauch (11) durch den Balg (12) radial direkt oder indirekt gehalten wird, wobei der Schlauch (11) durch ein Profilband mit im Querschnitt mindestens zwei, im gewickelten Zustand radial zueinander versetzten, axial aufeinanderfolgenden achsparallelen Abschnitten (11a, 11b) gebildet ist, die durch einen Verbindungsabschnitt (11c) mit zumindest radialer Erstreckungskomponente verbunden sind, und wobei die Axialabschnitte (11a, 11b) an mindestens einem ihrer einander abgewandten freien Enden mit sich jeweils auf die Radialebene des anderen Axialabschnittes (11b, 11a) zu erstreckenden Abschnitten (11e) mit zumindest radialer Komponente versehen sind, **gekennzeichnet durch** eine sich nach außen erstreckende radiale Ausformung (11g) des inneren achsparallelen Bandabschnittes (11a), auf dem der äußere achsparallele Bandabschnitt (11b) aufliegt, wobei die Ausformung (11g) im Querschnitt trapezförmig ausgebildet ist.

6. Leitungselement nach Anspruch 4 oder 5, **dadurch gekennzeichnet, dass** die Abschnitte (11c, 11e) mit radialer Komponente senkrecht ausgerichtet sind.

7. Leitungselement nach Anspruch 4 oder 5, **dadurch gekennzeichnet, dass** die Bandabschnitte (11c, 11e) mit radialer Komponente einen stumpfen Winkel zu den achsparallelen Abschnitten (11a, 11b), an denen sie angeschlossen sind, einschließen.

8. Leitungselement nach Anspruch 4 oder 5, **dadurch gekennzeichnet, dass** die Bandabschnitte (11c, 11e) mit radialer Komponente einen spitzen Winkel zu den achsparallelen Abschnitten (11a, 11b), des Bandes, an denen sie angeschlossen sind, einschließen.

9. Flexibles Leitungselement (3), insbesondere für Abgasleitungen (1) von Verbrennungsmotoren bei Kraftfahrzeugen, mit mindestens einem Balg (12) und wenigstens einem innerhalb des Balgs (12) koaxial angeordneten, überlappende Windungen aufweisenden Schlauch (11), insbesondere Metallschlauch, wobei die Windungen einander in radialer Richtung berühren und der Schlauch (11) durch den Balg (12) radial direkt oder indirekt gehalten wird, wobei der Schlauch (11) durch zwei Profilbänder (11.1, 11.2) gebildet ist, von denen ein radial außen liegendes Band (11.2) im Querschnitt U-förmig ausgebildet ist und einen achsparallelen U-Steg (11.2a) sowie seitlich an diesen anschließend radial nach innen verlaufende Schenkel (11.2b) aufweist, **dadurch gekennzeichnet, dass** ein radial innen liegendes Band (11.1) des Schlauches (11) einen im Wesentlichen L-förmigen Querschnitt mit einem achsparallelen Steg (11.1a) und einem radialen Schenkel (11.1b) aufweist, wobei die Schenkel (11.1b, 11.2b) benachbarter Bänder einander hintergreifen, um so den Schlauch (11) zu bilden und wobei das innere Band (11.1) in dem Steg (11.1a) eine radial nach außen gerichtete Ausformung (11a') aufweist, auf der das äußere Band (11.2) sich radial abstützt.

10. Leitungselement nach einem der vorangehenden Ansprüche, **dadurch gekennzeichnet, dass** ein radial außen liegender achsparallelen Abschnitt (11b) eines den Schlauch (11) bildenden Bandes eine radial nach außen sich längs des Bandes erstreckende Ausformung (11f) aufweist.

11. Leitungselement nach einem der vorangehenden Ansprüche, **dadurch gekennzeichnet, dass** das mindestens eine Band zumindest zweilagig ausgebildet ist.

12. Leitungselement nach einem der vorangehenden Ansprüche, **dadurch gekennzeichnet, dass** bei mindestens zweilagiger Ausbildung die einzelnen Lagen und/oder bei Ausbildung des Metallschlauches durch mindestens zwei Bänder (11.1, 11.2) die Bänder aus unterschiedlichen Materialien bestehen.

13. Leitungselement nach einem der vorangehenden Ansprüche, **dadurch gekennzeichnet, dass** bei mindestens zweilagiger Ausbildung die einzelnen Lagen und/oder bei Ausbildung des Metallschlauches durch mindestens zwei Bänder (11.1, 11.2) die Bänder unterschiedliche Materialstärken aufweisen.

14. Leitungselement nach einem der vorangehenden Ansprüche, **dadurch gekennzeichnet, dass** der Balg (12) einen über seine gesamte Länge einheitlichen, konstanten Radius aufweist.

15. Leitungselement nach einem der Ansprüche 1 bis 13, **dadurch gekennzeichnet, dass** der Balg (12) zumindest eine Endwelle (12a) mit geringerem Radius als die Wellen (12b) in seinem mittleren Hauptbereich aufweist.

16. Leitungselement nach Anspruch 15, **dadurch gekennzeichnet, dass** die mindestens eine Welle (11a) mit geringerem Radius eine größere, radial innen liegende Fußbreite aufweist als die anderen Wellen (12b).

17. Leitungselement nach Anspruch 16, **dadurch gekennzeichnet, dass** die Fußbreite der Randwelle (12c) mit geringerem Radius das dreifache der Fußbreite der anderen Wellen (12b) des Balgs (12) beträgt.

18. Leitungselement nach Anspruch 15, **dadurch gekennzeichnet, dass** der Balg (12) an jedem Ende mindestens zwei Wellen (12a', 12a'') mit geringerem Radius als die Wellen (12b) in seinem mittleren Hauptbereich aufweist, wobei die jeweils äußerste Welle (12a') einen geringeren Radius als die nach innen hin folgende Welle (12a'') hat.

19. Leitungselement nach einem der vorangehenden Ansprüche, **dadurch gekennzeichnet, dass** innerer Metallschlauch (11) und Balg (12) einander direkt berühren.

20. Leitungselement nach einem der Ansprüche 1 bis 18, **dadurch gekennzeichnet, dass** zwischen Balg (12) und Metallschlauch (11) ein Abstandhalter (15) angeordnet ist.

21. Leitungselement nach Anspruch 20, **dadurch gekennzeichnet, dass** der Abstandhalter (15) aus einer schraubenförmig auf dem Metallschlauch (11) aufgewickelten Schnur besteht, dessen Windungen axialen Abstand zueinander haben.

22. Leitungselement nach Anspruch 20, **dadurch gekennzeichnet, dass** der Abstandhalter (15) in Form von sich achsparallel zwischen Metallschlauch (11) und Balg (12) erstreckenden Schnurabschnitten gebildet sind.

23. Leitungselement nach Anspruch 20, **dadurch gekennzeichnet, dass** der Abstandhalter (15) den Metallschlauch (11) als Mantel aus Metallgestricke, -gewebe, -geflecht umgibt.

24. Leitungselement nach einem der vorangehenden Ansprüche, **gekennzeichnet durch** einen den Balg (12) außenseitig umgebenden Überzug (13, 14).

25. Leitungselement nach Anspruch 24, **dadurch gekennzeichnet, dass** der Überzug (13, 14) aus einem Metallgestrickeschlauch (13) und/oder Metallgeflechtsschlauch (14) besteht.

26. Leitungselement nach einem der vorangehenden Ansprüche, **dadurch gekennzeichnet, dass** auf den Enden des Leitungselements (13) Metallringe (15) aufsitzen, mit denen die einzelnen Lagen des Leitungselements fest, vorzugsweise durch Schweißen, verbunden sind.

27. Leitungselement nach Anspruch 26, **dadurch gekennzeichnet, dass** die Metallringe (16) an ihren zum Mittelbereich des Leitungselements hin gerichteten Ende einen nach außen ragenden Radialflansch (15a) aufweisen.

28. Leitungselement nach einem der vorangehenden Ansprüche, **gekennzeichnet durch** jeweils einen von den Enden axial nach innen ragenden Rohrabschnitt (17).

29. Leitungselement nach Anspruch 28, **dadurch gekennzeichnet, dass** der Rohrabschnitt (17) an seinem ins Innere des Leitungselements ragenden Endabschnitt (17a) radial verjüngt ist.

30. Leitungselement nach Anspruch 29, **dadurch gekennzeichnet, dass** der Rohrabschnitt (17) in seinem verjüngten Bereich (17a) nach außen ragende Erhöhungen (17b) in Form von wellenförmigen Ausformungen, umlaufenden oder mit Umfangsabstand zueinander angeordneten Rippen aufweist.

31. Leitungselement nach einem der vorangehenden Ansprüche, **dadurch gekennzeichnet, dass** die Windungen des Schlauchs (11) einander in achsparallelen Abschnitten in radialer Richtung berühren.

## Claims

1. A flexible line element (3), in particular for exhaust gas lines (1) of combustion engines in motor vehicles, comprising at least one bellows (12) and at least one hose (11), in particular a metal hose, which is arranged coaxially within the bellows (12) and comprises overlapping windings, the windings being in contact with one another in the radial direction and the hose (11) being directly or indirectly held radially by the bellows (12), **characterised by** a hose (11) consisting of two profile strips (11.1, 11.2), which in each case comprise three axially parallel portions arranged one behind the other in the axial direction in the wound state, the middle of which portions (11.1a, 11.2a) is radially offset relative to the two edge portions (11.1a', 11.2a'), and adjacent axially parallel portions (11.1a, 11.1a', 11.2a, 11.2a') of a winding being joined by portions (11.1b, 11.2b) having a radial extension component and axially parallel edge portions (11.1a', 11.2a') of adjacent windings of the one and the other strip (11.1, 11.2) overlapping one another axially and being arranged radially one above the other.

2. A flexible line element (3), in particular for exhaust gas lines (1) of combustion engines in motor vehicles, comprising at least one bellows (12) and at least one hose (11), in particular a metal hose, which is arranged coaxially within the bellows (12) and comprises overlapping windings, the windings being in contact with one another in the radial direction and the hose (11) being directly or indirectly held radially by the bellows (12), the hose (11) being formed by a profile strip having in cross-section at least two axially successive axially parallel portions (11a, 11b) which are offset radially to one another in the wound state and are joined by a joining portion (11c) having an at least radial extension component, **characterised by** three axial portions (11a, 11b, 11b') of the cross-section of the strip which, in the wound state, are in each case radially offset relative to one another, are axially successive and in each case in one strip do not overlap, with successive axial portions (11a, 11b; 11b, 11b') in each case being joined by joining portions (11c, 11c') with a radial component.

3. A line element according to claim 2, **characterised in that** the portions (11c, 11c') with a radial component are oriented perpendicularly.

4. A flexible line element (3), in particular for exhaust gas lines (1) of combustion engines in motor vehicles, comprising at least one bellows (12) and at least one hose (11), in particular a metal hose, which is arranged coaxially within the bellows (12) and comprises overlapping windings, the windings being in contact with one another in the radial direction and the hose (11) being directly or indirectly held radially by the bellows (12), the hose (11) being formed by a profile strip having in cross-section at least two axially successive axially parallel portions (11a, 11b) which are offset radially to one another in the wound state and are joined by a joining portion (11c) having an at least radial extension component, and the axial portions (11a, 11b) being provided on at least one of their mutually remote free ends with portions (11e), having an at least radial component, extending in each case towards the radial plane of the other axial portion (11b, 11a), **characterised by** an outwardly extending radial shaped portion (11g) of the inner axially parallel strip portion (11a), on which the outer axially parallel strip portion (11b) lies, the shaped portion (11g) being of acute-angled shape.

5. A flexible line element (3), in particular for exhaust gas lines (1) of combustion engines in motor vehicles, comprising at least one bellows (12) and at least one hose (11), in particular a metal hose, which is arranged coaxially within the bellows (12) and comprises overlapping windings, the windings being in contact with one another in the radial direction and the hose (11) being directly or indirectly held radially by the bellows (12), the hose (11) being formed by a profile strip having in cross-section at least two axially successive axially parallel portions (11a, 11b) which are offset radially to one another in the wound state and are joined by a joining portion (11c) having an at least radial extension component, and the axial portions (11a, 11b) being provided on at least one of their mutually remote free ends with portions (11e), having an at least radial component, extending in each case towards the radial plane of the other axial portion (11b, 11a), **characterised by** an outwardly extending radial shaped portion (11g) of the inner axially parallel strip portion (11a), on which the outer axially parallel strip portion (11b) lies, the shaped portion (11g) being trapezoidally shaped in cross-section.

6. A line element according to claim 4 or claim 5, **characterised in that** the portions (11c, 11e) with a radial component are oriented perpendicularly.

7. A line element according to claim 4 or claim 5, **characterised in that** the strip portions (11c, 11e) with a radial component form an obtuse angle to the axially parallel portions (11a, 11b) to which they are connected.

8. A line element according to claim 4 or claim 5, **characterised in that** the strip portions (11c, 11e) with a radial component form an acute angle to axially parallel portions (11a, 11b) of the strip to which they are connected.

9. A flexible line element (3), in particular for exhaust gas lines (1) of combustion engines in motor vehicles, comprising at least one bellows (12) and at least one hose (11), in particular a metal hose, which is arranged coaxially within the bellows (12) and comprises overlapping windings, the windings being in contact with one another in the radial direction and the hose (11) being directly or indirectly held radially by the bellows (12), the hose (11) being formed by two profile strips (11.1, 11.2), of which a radially outer strip (11.2) is U-shaped in cross-section and comprises an axially parallel U web (11.2a) together with, laterally adjacent thereto, a radially inwardly extending leg (11.2b), **characterised in that** a radially inner strip (11.1) of the hose (11) comprises a substantially L-shaped cross-section with an axially parallel web (11.1a) and a radial leg (11.1b), the legs (11.1b, 11.2b) of adjacent strips engaging behind one another, so as to form the hose (11) and the inner strip (11.1) comprising in the web (11.1a) a radially outwardly directed shaped portion (11a'), on which the outer strip (11.2) rests radially.

10. A line element according to any one of the preceding claims, **characterised in that** a radially outer axially parallel portion (11b) of a strip forming the hose (11) comprises a shaped portion (11) which extends radially outwards along the strip.

11. A line element according to any one of the preceding claims, **characterised in that** the at least one strip is of at least two-ply construction.

12. A line element according to any one of the preceding claims, **characterised in that**, in the case of at least two-ply construction, the individual plies and/or, where the metal hose is formed by at least two strips (11.1, 11.2), the strips consist of different materials.

13. A line element according to any one of the preceding claims, **characterised in that,** in the case of at least two-ply construction, the individual plies and/or, where the metal hose is formed by at least two strips (11.1, 11.2), the strips have different material thicknesses.

14. A line element according to any one of the preceding claims, **characterised in that** the bellows (12) comprise a uniform, constant radius over their entire length.

15. A line element according to any one of claims 1 to 13, **characterised in that** the bellows (12) comprise at least one end undulation (12a) with a smaller radius than the undulations (12b) in the central main region thereof.

16. A line element according to claim 15, **characterised in that** the at least one undulation (11a) with a smaller radius comprises a larger, radially inner foot width than the other undulations (12b).

17. A line element according to claim 16, **characterised in that** the foot width of the edge undulation (12c) with a smaller radius amounts to three times the foot width of the other undulations (12b) of the bellows (12).

18. A line element according to claim 15, **characterised in that** the bellows (12) comprise at each end at least two undulations (12a', 12a'') with a smaller radius than the undulations (12b) in the central main region thereof, with the in each case outermost undulation (12a') having a smaller radius than the next inward undulation (12a'').

19. A line element according to any one of the receding claims, **characterised in that** the inner metal hose (11) and bellows (12) are in direct contact with one another.

20. A line element according to any one of claims 1 to 18, **characterised in that** a spacer (15) is arranged between the bellows (12) and metal hose (11).

21. A line element according to claim 20, **characterised in that** the spacer (15) consists of a cord wound helically onto the metal hose (11), the windings of are axially spaced apart.

22. A line element according to claim 20, **characterised in that** the spacer (15) takes the form of cord portions which extend axially parallel between the metal hose (11) and bellows (12).

23. A line element according to claim 20, **characterised in that** the spacer (15) surrounds the metal hose (11) as a jacket of knitted, woven or braided metal fabric.

24. A line element according to any one of the preceding claims, **characterised by** a cover (13, 14) surrounding the bellows (12) on the outside.

25. A line element according to claim 24, **characterised in that** the cover (13, 14) consists of a knitted metal hose (13) and/or a braided metal hose (14).

26. A line element according to any one of the preceding claims, **characterised in that** metal rings (15) are located on the ends of the line element (13), with which metal rings the individual plies of the line element are firmly joined, preferably by welding.

27. A line element according to claim 26, **characterised in that** the metal rings (16) comprise an outwardly projecting radial flange (15a) on their end directed towards the central region of the line element.

28. A line element according to any one of the preceding claims, **characterised by** a tube portion (17) which in each case projects axially inwards from the ends.

29. A line element according to claim 28, **characterised in that** the tube portion (17) is radially tapered on its end portion (17a) projecting into the interior of the line element.

30. A line element according to claim 29, **characterised in that** the tube portion (17) comprises in its tapered region (17a) outwardly projecting elevations (17b) in the form of undulating shaped portions, circumferential ribs or ribs arranged circumferentially spaced from one another.

31. A line element according to any one of the preceding claims, **characterised in that** the windings of the hose (11) are in contact with one another in axially parallel portions in a radial direction.

## Revendications

1. Élément souple d'un conduit (3), notamment pour des conduits de gaz d'échappement (1) de moteurs à combustion interne pour véhicules automobiles, comprenant au moins un soufflet (12) et au moins un tuyau (11), singulièrement un tuyau métallique, placé de manière coaxiale dans le soufflet (12) et présentant des spires se chevauchant, les spires se touchant réciproquement dans le sens radial et le tuyau (11) étant maintenu directement ou indirectement par le soufflet (12) dans le sens radial, **caractérisé par** un tuyau (11) composé de deux bandes profilées (11.1, 11.2), lesquelles présentent chacune trois tronçons parallèles à l'axe consécutifs dans le sens axial à l'état enroulé, et dont le tronçon central (11.1a, 11.2a) est désaxé radialement par rapport aux deux tronçons du bord (11.1a', 11.2a'), et des tronçons voisins parallèles à l'axe (11.1a, 11.1a' ; 11.2a, 11.2a') d'une spire étant reliés par des tronçons (11.1b, 11.2b) à composante de projection radiale de même que des tronçons du bord (11.1a', 11.2a') parallèles à l'axe de spires voisines de chacune des bandes (11.1, 11.2) se chevauchent axialement et sont disposés radialement l'un au-dessus de l'autre.

2. Élément souple d'un conduit (3), notamment pour des conduits de gaz d'échappement (1) de moteurs à combustion interne pour véhicules automobiles, comprenant au moins un soufflet (12) et au moins un tuyau (11), singulièrement un tuyau métallique, placé de manière coaxiale dans le soufflet (12) et présentant des spires se chevauchant, les spires se touchant réciproquement dans le sens radial et le tuyau (11) étant maintenu directement ou indirectement par le soufflet (12) dans le sens radial, le tuyau (11) étant formé par une bande profilée avec dans sa section au moins deux tronçons (11a, 11b) parallèles à l'axe consécutifs dans le sens axial et désaxés dans le sens radial à l'état enroulé, lesdits tronçons étant reliés par un tronçon d'assemblage (11c) à composantes de projection au moins radiales, **caractérisé par** trois tronçons axiaux (11a, 11b, 11b') de la section de la bande disposés l'un derrière l'autre dans le sens axial et désaxés radialement à l'état enroulé et ne se chevauchant pas sur une bande, les tronçons axiaux consécutifs (11a, 11b; 11b, 11b') étant reliés par des tronçons d'assemblage (11c, 11c') à composante de projection radiale.

3. Élément d'un conduit selon la revendication 2, **caractérisé en ce que** les tronçons (11c, 11c') à composante radiale sont orientés perpendiculairement.

4. Élément souple d'un conduit (3), notamment pour des conduits de gaz d'échappement (1) de moteurs à combustion interne pour véhicules automobiles, comprenant au moins un soufflet (12) et au moins un tuyau (11), singulièrement un tuyau métallique, placé de manière coaxiale dans le soufflet (12) et présentant des spires se chevauchant, les spires se touchant réciproquement dans le sens radial et le tuyau (11) étant maintenu directement ou indirectement par le soufflet (12) dans le sens radial, le tuyau (11) étant formé par une bande profilée avec dans sa section au moins deux tronçons parallèles à l'axe (11a, 11b), consécutifs dans le sens axial et désaxés radialement à l'état enroulé, lesdits tronçons étant reliés par un tronçon d'assemblage (11c) à composante de projection au moins radiale, les tronçons axiaux (11a, 11b) étant *dotés* sur au moins une de leur extrémité libre opposée de tronçons (11e) à composante au moins radiale se projetant chacun sur le plan radial de l'autre tronçon axial (11b, 11a), **caractérisé par** une formation (11g) radiale, se projetant vers l'extérieur, du tronçon de la bande intérieure parallèle à l'axe (11a), sur lequel est posé le tronçon de la bande extérieure parallèle à l'axe (11b), la formation (11g) étant de forme acutangle.

5. Élément souple d'un conduit (3), notamment pour des conduits de gaz d'échappement (1) de moteurs à combustion interne pour véhicules automobiles, comprenant au moins un soufflet (12) et au moins un tuyau (11), singulièrement un tuyau métallique, placé de manière coaxiale dans le soufflet (12) et présentant des spires se chevauchant, les spires se touchant réciproquement dans le sens radial et le tuyau (11) étant maintenu directement ou indirectement par le soufflet (12) dans le sens radial, le tuyau (11) étant formé par une bande profilée avec dans sa section au moins deux tronçons parallèles à l'axe (11a, 11b), consécutifs dans le sens axial et désaxés radialement à l'état enroulé, lesdits tronçons étant reliés par un tronçon d'assemblage (11c) à composante de projection au moins radiale, les tronçons axiaux (11a, 11b) étant *dotés* sur au moins une de leur extrémité libre opposée de tronçons (11e) à composante au moins radiale se projetant chacun sur le plan radial de l'autre tronçon axial (11b, 11a),
**caractérisé par** une formation (11g) radiale, se projetant vers l'extérieur, du tronçon de la bande intérieure parallèle à l'axe (11a), sur lequel est posé le tronçon de la bande extérieure parallèle à l'axe (11b), la formation (11g) étant dans sa section de forme trapézoïdale.

6. Élément d'un conduit selon les revendications 4 ou 5, **caractérisé en ce que** les tronçons (11c, 11e) à composante radiale sont orientés perpendiculairement.

7. Élément de conduit selon les revendications 4 ou 5, **caractérisé en ce que** les tronçons de bande (11c, 11e) à composante radiale renferment un angle obtus formé avec les tronçons parallèles à l'axe (11a, 11b) auxquels ils sont adjacents.

8. Élément de conduit selon les revendications 4 ou 5, **caractérisé en ce que** les tronçons de bande (11c, 11e) à composante radiale renferment un angle aigu formé avec les tronçons parallèles à l'axe (11a, 11b) auxquels ils sont adjacents.

9. Élément souple d'un conduit (3), notamment pour des conduits de gaz d'échappement (1) de moteurs à combustion interne pour véhicules automobiles, comprenant au moins un soufflet (12) et au moins un tuyau (11), singulièrement un tuyau métallique, placé de manière coaxiale dans le soufflet (12) et présentant des spires se chevauchant, les spires se touchant réciproquement dans le sens radial et le tuyau (11) étant maintenu directement ou indirectement par le soufflet (12) dans le sens radial, le tuyau (11) étant formé de deux bandes profilées (11.1, 11.2), dont l'une placée radialement à l'extérieur (11.2) est en forme de U dans sa section et présente un dos de U parallèle à l'axe (11.2a) prolongé de branches latérales radiales (11.2b) s'étendant vers l'intérieur, **caractérisé en ce qu'**une bande radiale (11.1) placée à l'intérieur du tuyau (11) présente une section essentiellement en forme de L avec un dos (11.1a) parallèle à l'axe et une branche radiale (11.1b), les branches (11.1b, 11.2b) de bandes voisines s'agrippant par l'arrière de manière à former le tuyau (11), *et la bande intérieure* (11.1) présentant dans le dos (11.1a) une formation radiale (11a') orientée vers l'extérieur, sur laquelle repose radialement la bande extérieure (11.2).

10. Élément de conduit selon une des revendications qui précèdent, **caractérisé en ce qu'**un tronçon parallèle à l'axe (11b) placé radialement à l'extérieur, tronçon de la bande formant le tuyau (11) présente une formation (11f) s'étendant radialement vers l'extérieur le long de la bande.

11. Élément de conduit selon une des revendications qui précèdent, **caractérisé en ce qu'**au moins une bande est formée d'au moins deux couches.

12. Élément de conduit selon une des revendications qui précèdent, **caractérisé en ce que** dans la réalisation en au moins deux couches les différentes couches, et/ou dans la réalisation du tuyau métallique par au moins deux bandes (11.1, 11.2), les bandes sont composées de matériaux différents.

13. Élément de conduit selon une des revendications qui précèdent, **caractérisé en ce que** dans la réalisation en au moins deux couches les différentes couches, et/ou dans la réalisation du tuyau métallique par au moins deux bandes (11.1, 11.2), les bandes présentent différentes épaisseurs de matériau.

14. Élément de conduit selon une des revendications qui précèdent, **caractérisé en ce que** le soufflet (12) présente un rayon unique et constant sur toute sa longueur.

15. Élément de conduit selon une des revendications 1 à 13, **caractérisé en ce que** le soufflet (12) présente au moins une ondulation terminale (12a) de rayon inférieur à celui des ondulations (12b) dans sa partie principale moyenne.

16. Élément de conduit selon la revendication 15, **caractérisé en ce qu'**au moins une ondulation (11a) avec rayon inférieur présente une largeur de semelle radiale intérieure plus grande que les autres ondulations (12b).

17. Élément de conduit selon la revendication 16, **caractérisé en ce que** la largeur de semelle de l'ondulation du bord (12c) au rayon inférieur est égale à trois fois la largeur de semelle des autres ondulations (12b) du soufflet (12).

18. Élément de conduit selon la revendication 15, **caractérisé en ce que** le soufflet (12) présente à chaque extrémité au moins deux ondulations (12a', 12a'') de rayon inférieur à celui des ondulations (12b) dans sa partie principale centrale, l'ondulation située respectivement le plus à l'extérieur (12a') présentant un rayon inférieur à celui de l'ondulation suivante vers l'intérieur (12a").

19. Élément de conduit selon une des revendications qui précèdent, **caractérisé en ce que** le tuyau métallique intérieur (11) et le soufflet (12) se touchent directement.

20. Élément de conduit selon une des revendications 1 à 18, **caractérisé en ce qu'**un écarteur (15) est disposé entre le soufflet (12) et le tuyau métallique (11).

21. Élément de conduit selon la revendication 20, **caractérisé en ce que** l'écarteur (15) est composé par un cordon enroulé hélicoïdalement sur le tuyau métallique (11) et dont les spires ont une distance axiale les unes des autres.

22. Élément de conduit selon la revendication 20, **caractérisé en ce que** l'écarteur (15) est formé par des tronçons de cordon qui s'étendent parallèlement à l'axe entre le tuyau métallique (11) et le soufflet (12).

23. Élément de conduit selon la revendication 20, **caractérisé en ce que** l'écarteur (15) entoure le tuyau métallique (11) sous forme d'un manteau en tricotage, tissage ou maillage métallique.

24. Élément de conduit selon une des revendications qui précèdent, **caractérisé par** un revêtement (13, 14) recouvrant le soufflet (12) sur sa face extérieure.

25. Élément de conduit selon la revendication 24, **caractérisé en ce que** le revêtement (13, 14) est composé d'une gaine tricotée métallique (13) et/ou d'une gaine maillée métallique (14).

26. Élément de conduit selon une des revendications qui précèdent, **caractérisé en ce que** des bagues métalliques (15) sont posées sur les extrémités dudit élément de conduit (13), bagues grâce auxquelles les différentes couches dudit élément de conduit sont liées, de préférence par soudage.

27. Élément de conduit selon la revendication 26, **caractérisé en ce que** les bagues métalliques (16) présentent en leur extrémité orientée vers la partie centrale dudit élément de conduit une bride radiale (15a) s'étendant vers l'extérieur.

28. Élément de conduit selon une des revendications qui précédent, **caractérisé par** un tronçon de tube (17) s'étendant de manière axiale des extrémités respectives vers l'intérieur.

29. Élément de conduit selon la revendication 28, **caractérisé en ce que** le tronçon de tube (17) s'amincit radialement en son tronçon terminal (17a) s'étendant vers l'intérieur dudit élément de conduit.

30. Élément de conduit selon la revendication 29, **caractérisé en ce que** le tronçon de tube (17) présente dans sa partie amincie (17a) des dominances (17b) pointant vers l'extérieur sous forme de formations onduleuses, de nervures périphériques ou disposées à distance périphérique les unes des autres.

31. Élément de conduit selon une des revendications qui précèdent, **caractérisé en ce que** les spires du tuyau (11) sont en contact les unes aux autres dans des tronçons parallèles à l'axe dans le sens radial.
